# EUROPEAN PATENT APPLICATION

(11) **EP 4 415 481 A1**
(43) Date of publication of application: **14.08.2024**
(21) Application number: 23869288.3
(22) Date of filing: 28.09.2023
(51) Int. Cl.: H05B 6/10, C21D 1/42, C21D 9/40

(54) **INDUCTION HEATING METHOD AND INDUCTION HEATING DEVICE FOR RING-LIKE MEMBER, MANUFACTURING METHOD FOR RING-LIKE MEMBER, MANUFACTURING METHOD FOR BEARING, MANUFACTURING METHOD FOR VEHICLE, AND MANUFACTURING METHOD FOR MECHANICAL DEVICE**

(30) Priority: 12.12.2022 JP 2022197637
(71) Applicant: NSK Ltd., Tokyo 141-8560 (JP)
(72) Inventor: KAWAKAMI Kinya, Fujisawa-shi, Kanagawa 251-8501 (JP); IZUMI Shinji, Fujisawa-shi, Kanagawa 251-8501 (JP); KIKUCHI Tokumasa, Fujisawa-shi, Kanagawa 251-8501 (JP); KOYAMA Hiroshi, Fujisawa-shi, Kanagawa 251-8501 (JP)
(74) Representative: Grünecker Patent- und Rechtsanwälte PartG mbB
(86) International application number: PCT/JP2023/035522
(87) International publication number: WO 2024/127767

(57) **Abstract**

An induction heating method includes a step of supplying a ring-shaped member (Mr) to a predetermined section serving as a heating target section using an induction coil, and a step of moving the ring-shaped member (Mr) along a reference axis so as to pass through the predetermined section. The moving step includes controlling contact between the ring-shaped member (Mr) and a different member by a contact control portion (54).

## Description

### [Technical Field]

The present disclosure relates to a method for induction-heating a ring-shaped member such as a component of a bearing, for example.

Priority is claimed on Japanese Patent Application No. 2022-197637, filed December 12, 2022, the content of which is incorporated herein by reference.

### [Background Art]

For example, in a process of manufacturing ring-shaped members, such as bearing rings for rolling bearings, made of a steel material such as SUJ2, heat treatment, specifically quenching processing and tempering processing for applying a necessary mechanical strength or the like to ring-shaped members is performed. Both the quenching processing and the tempering processing include a heating step of heating a ring-shaped member (workpiece) to a target temperature, and a cooling step of cooling a heated ring-shaped member.

Regarding a heating method for a ring-shaped member in a heating step, a method for heating a ring-shaped member inside a heating furnace and a method for induction-heating a ring-shaped member using a coil are known. Since a ring-shaped member can be directly heated in the method using a coil, higher energy efficiency can be achieved than in the method using a heating furnace.

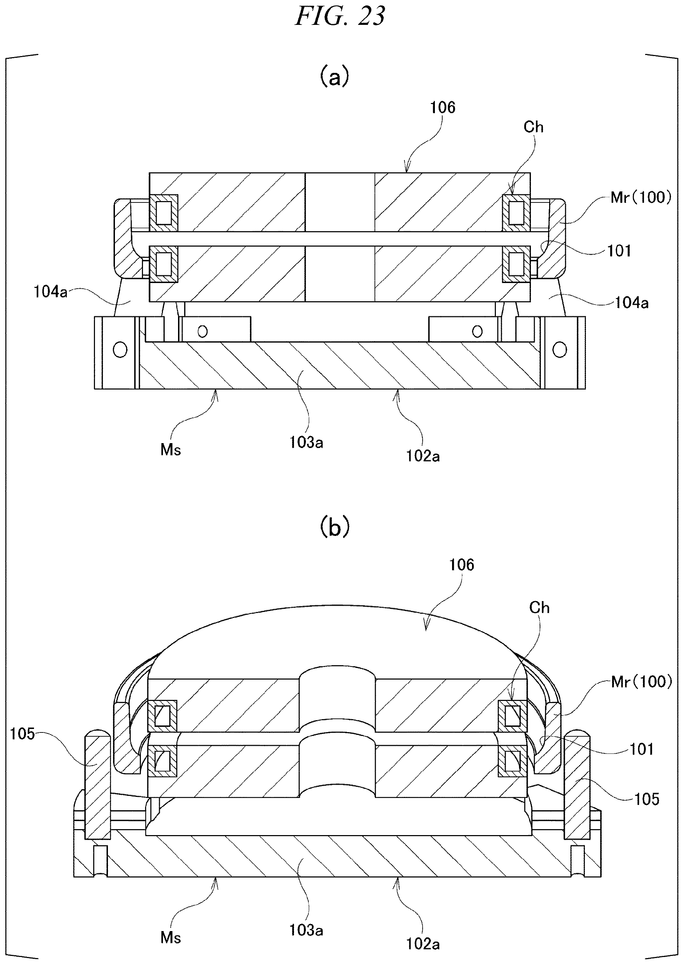

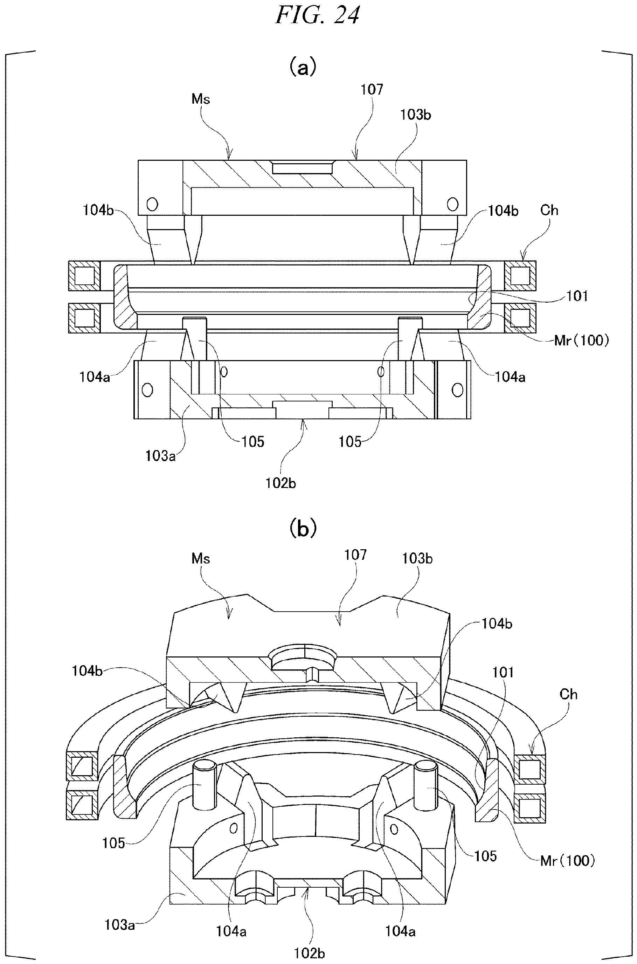

Regarding a specific example of a method using a coil, for example, as shown in FIGS. 23 and 24, a method for induction-heating a ring-shaped member Mr by generating an eddy current inside the ring-shaped member Mr using an electrified coil Ch in a state in which the ring-shaped member Mr is supported by a support member Ms and the coil Ch is disposed at a radially inward side of the ring-shaped member Mr or a radially outward side thereof, is known. In the illustrated example, the ring-shaped member Mr is an outer ring 100 constituting a rolling bearing and has an outer ring raceway 101 on an inner circumferential surface. However, the illustrated heating method is not limited to the outer ring 100 and can also be performed so as to be targeted at other ring-shaped members such as an inner ring constituting a rolling bearing.

In the example shown in FIG. 23, the support member Ms is constituted of a one-side tool 102a disposed on one side of the ring-shaped member Mr in an axial direction (the downward side in the part (a) of FIG. 23, and the downward side in the part (b) of FIG. 23).

The one-side tool 102a includes a base 103a, a plurality of axial restraining portions 104a, and a plurality of radial restraining portions 105.

The base 103a has a central axis which is disposed coaxially with the ring-shaped member Mr.

The plurality of axial restraining portions 104a are supported by and fixed to a plurality of locations in a circumferential direction on the base 103a, and respective tip portions (the upper end portion in the part (a) of FIG. 23, and the upper end portion in the part (b) of FIG. 23) are brought into contact with a side surface of the ring-shaped member Mr on one side in the axial direction so that the ring-shaped member Mr is positionally set in the axial direction with respect to the base 103a. Shapes of the axial restraining portions 104a can be arbitrarily set. However, in the illustrated example, parts of the axial restraining portions 104a on a tip side each have a wedge shape with a circumferential width decreasing toward the tip side. Accordingly, contact areas of the tip portions of the axial restraining portions 104a with respect to the side surface of the ring-shaped member Mr on one side in the axial direction are regulated so that heat transfer from the ring-shaped member Mr to the axial restraining portions 104a occurring during induction heating of the ring-shaped member Mr can be regulated.

The plurality of radial restraining portions 105 are supported by and fixed to a plurality of locations in the circumferential direction on the base 103a. Respective tip portions (the upper end portion in the part (a) of FIG. 23, and the upper end portion in the part (b) of FIG. 23) are caused to come into contact with or closely face an outer circumferential surface of the ring-shaped member Mr so that the ring-shaped member Mr is positionally set in the radial direction with respect to the base 103a, and therefore the ring-shaped member Mr is disposed coaxially with the base 103a. Shapes of the radial restraining portions 105 are arbitrary. However, in the illustrated example, the radial restraining portions 105 each have a columnar shape. Accordingly, contact areas of the tip portions of the radial restraining portions 105 with respect to the outer circumferential surface of the ring-shaped member Mr are regulated so that heat transfer from the ring-shaped member Mr to the radial restraining portions 105 occurring during induction heating of the ring-shaped member Mr can be regulated.

In the example shown in FIG. 23, the coil Ch is constituted to have a cylindrical shape and is disposed coaxially with the ring-shaped member Mr and the base 103a a the radially inward side of the ring-shaped member Mr. The coil Ch is supported by a support member (not shown). In the illustrated example, a core 106 made of a magnetic material is disposed at the radially inward side of the coil Ch. The core 106 is fixed to the coil Ch or is supported by another support member (not shown). The core 106 can be omitted. Further, in this state, an eddy current is generated in a part of the ring-shaped member Mr at the radially inward side by electrifying the coil Ch, and the ring-shaped member Mr is heated from the radially inward side. At this time, heating of the ring-shaped member Mr can also be performed while relatively rotating the ring-shaped member Mr with the support member Ms and the coil Ch.

In the example shown in FIG. 24, the support member Ms is constituted of a one-side tool 102b disposed on one side of the ring-shaped member Mr in the axial direction (the downward side in the part (a) of FIG. 24, and the downward side in the part (b) of FIG. 24), and the other-side tool 107 disposed on the other side of the ring-shaped member Mr in the axial direction (the upward side in the part (a) of FIG. 24, and the upward side in the part (b) of FIG. 24).

Similar to the one-side tool 102a (refer to FIG. 23), the one-side tool 102b includes the base 103a, the plurality of axial restraining portions 104a which are supported by and fixed to a plurality of locations in the circumferential direction on the base 103a, and the plurality of radial restraining portions 105 which are supported by and fixed to a plurality of locations in the circumferential direction on the base 103a. The tip portions of the plurality of axial restraining portions 104a (the upper end portion in the part (a) of FIG. 24, and the upper end portion in the part (b) of FIG. 24) are brought into contact with the side surface of the ring-shaped member Mr on one side in the axial direction so that the ring-shaped member Mr is positionally set in the axial direction with respect to the base 103a. In the plurality of radial restraining portions 105 of the one-side tool 102b, the respective tip portions (the upper end portion in the part (a) of FIG. 23, and the upper end portion in the part (b) of FIG. 23) are caused to come into contact with or closely face the inner circumferential surface of the ring-shaped member Mr so that the ring-shaped member Mr is positionally set in the radial direction with respect to the base 103a, and therefore the ring-shaped member Mr is disposed coaxially with the base 103a.

The other-side tool 107 includes a base 103b and a plurality of axial restraining portions 104b.

The base 103b has a central axis which is disposed coaxially with the base 103 of the one-side tool 102b and the ring-shaped member Mr.

The plurality of axial restraining portions 104b are supported by and fixed to a plurality of locations in the circumferential direction on the base 103b. Respective tip portions (the lower end portion in the part (a) of FIG. 24, and the lower end portion in the part (b) of FIG. 24) are brought into contact with the side surface of the ring-shaped member Mr on the other side in the axial direction so that the ring-shaped member Mr is positionally set in the axial direction with respect to the base 103b. In other words, in the example shown in FIG. 24, the ring-shaped member Mr is positionally set in the axial direction by sandwiching the ring-shaped member Mr in the axial direction between the one-side tool 102b and the other-side tool 107. Shapes of the axial restraining portions 104b can be arbitrarily set. However, in the illustrated example, parts of the axial restraining portions 104b on a tip side each have a wedge shape with a circumferential width decreasing toward the tip side. Accordingly, contact areas of the tip portions of the axial restraining portions 104b with respect to the side surface of the ring-shaped member Mr on the other side in the axial direction are regulated so that heat transfer from the ring-shaped member Mr to the axial restraining portions 104b occurring during induction heating of the ring-shaped member Mr can be regulated.

In the example shown in FIG. 24, the coil Ch is constituted to have a cylindrical shape and is disposed coaxially with the ring-shaped member Mr and the bases 103a and 103b at the radially outward side of the ring-shaped member Mr. The coil Ch is supported by a support member (not shown). In the example shown in FIG. 24, a core (not shown) made of a magnetic material can also be disposed at the radially outward side of the coil Ch. The core is fixed to the coil Ch or is supported by another support member (not shown). Further, in this state, an eddy current is generated in a part of the ring-shaped member Mr at the radially outward side by electrifying the coil Ch, and the ring-shaped member Mr is heated from the radially outward side. At this time, heating of the ring-shaped member Mr can also be performed while relatively rotating the ring-shaped member Mr with the support member Ms and the coil Ch.

In the examples shown in FIGS. 23 and 24, the support member Ms is constituted of an insulating material which is not induction-heated by the coil Ch. Accordingly, the ring-shaped member Mr can be efficiently induction-heated. For example, a synthetic resin material such as polyetheretherketone (PEEK) can be used as an insulating material constituting the bases 103a and 103b in the support member Ms. In addition, for example, a ceramic can be used as an insulating material constituting the axial restraining portions 104a and 104b and the radial restraining portions 105 in the support member Ms.

The heating methods shown in FIGS. 23 and 24 can be performed by being suitably combined within a range having no contradiction. For example, when the ring-shaped member Mr is heated from the radially inward side by the coil Ch, the ring-shaped member Mr is sandwiched between the one-side tool and the other-side tool in the axial direction so that the ring-shaped member Mr can also be positionally set in the axial direction. In addition, when the ring-shaped member Mr is heated from the radially outward side by the coil Ch, the ring-shaped member Mr can also be positionally set in the axial direction using only the one-side tool. In addition, the ring-shaped member Mr can also be heated to a target temperature by sequentially performing a step of heating the ring-shaped member Mr from the radially inward side using the coil Ch and the step of heating the ring-shaped member Mr from the radially outward side using the coil Ch. At this time, the step to be performed first can be arbitrarily determined.

In a series of steps of the quenching processing and the tempering processing for a ring-shaped member, each of the steps of heating and cooling for quenching and heating and cooling for tempering can also be performed at one place. However, the time required for the series of steps is shortened by dividing the steps and delivering the ring-shaped member Mr to the next step as soon as the previous step is completed.

Anyhow, in the heating methods shown in FIGS. 23 and 24, there is a need to sequentially perform heating treatment of a plurality of ring-shaped members Mr one by one. For this reason, in order to enhance productivity, a plurality of heating apparatuses shown in the respective diagrams are prepared, and heating treatment of a plurality of ring-shaped members Mr is executed in parallel.

However, since there is a need to install a plurality of heating apparatuses in this method, there is a problem that a heating facility is likely to be increased in size.

Japanese Unexamined Patent Application, First Publication No. 2015-67880 discloses a method in which a plurality of ring-shaped members stacked on an upper surface of a support member are raised together with the support member. Each of a plurality of ring-shaped members is sequentially induction-heated by causing the plurality of ring-shaped members to sequentially pass through a region at a radially inward side (a heating section of a coil in an electrified state) upward from below. According to this method, heating treatment of a plurality of ring-shaped members can be smoothly performed with one heating apparatus, and therefore high productivity can be secured with a small-sized heating facility.

Japanese Patent Application, Publication No. 2019-61833 discloses a method in which a plurality of ring-shaped members are each sequentially induction-heated by causing the plurality of ring-shaped members to sequentially pass through a region at a radially inward side (a heating section of a coil in an electrified state) upward from below using a support member, of which the diameter of an inscribed circle can be increased and decreased, and a supply means.

In this method, specifically, the support member is constituted of support claws which are disposed at three locations in a circumferential direction, and the diameter of the inscribed circle is increased and decreased in response to synchronized movement of the support claws in the radial direction. The supply means can move up and down and is disposed below the support member at an original position.

When heating treatment is performed, if one ring-shaped member is placed on an upper surface of the supply means at the original position, the supply means moves upward. Consequently, the diameter of the inscribed circle of the support member is increased. The one ring-shaped member placed on the upper surface of the supply means passes through a radially inward side of the support member upward from below and is introduced into a heating section of a coil. Thereafter, the supply means moves downward, and the supply means returns to the original point. At this time, at a timing when the upper surface of the supply means is present at vertically the same position as an upper surface of the support member, the diameter of the inscribed circle of the support member is decreased, and the one ring-shaped member placed on the upper surface of the supply means is supported by the support member from a lower side. The ring-shaped member is introduced into the heating section of the coil in this manner. Thereafter, the foregoing operation is repeated. That is, ring-shaped members are introduced into the heating section of the coil one by one upward from below so that the ring-shaped members are stacked on the upper surface of the support member. At the same time, the ring-shaped members are intermittently fed to the heating section of the coil upward from below. Further, these ring-shaped members are induction-heated while sequentially passing through the heating section of the coil. By this method as well, heating treatment of a plurality of ring-shaped members can be smoothly performed with one heating apparatus, and therefore high productivity can be secured with a small-sized heating facility.

### [Citation List]

### [Patent Document]

[Patent Document 1]
   Japanese Patent Application, Publication No. 2015-67880
[Patent Document 2]
   Japanese Patent Application, Publication No. 2019-61833

### [Summary of Invention]

### [Technical Problem]

The heating treatment in the related art disclosed in Japanese Patent Application, Publication No. 2015-67880 is batch processing in which heating is performed for each lot while having a plurality of ring-shaped members stacked on an upper surface of a support member as one lot. In order to enhance the processing capability in the batch processing, that is, to increase the number of items processed per unit time, there is a need to increase the number of ring-shaped members constituting one lot. However, in this processing method, a plurality of ring-shaped members constituting one lot are stacked and raised on the upper surface of the support member. If the number of ring-shaped members is increased, the posture of the ring-shaped members will become unstable and the ring-shaped members will come into contact with a coil so that heating will not be able to be evenly performed. For this reason, the number of ring-shaped members constituting one lot is set to be relatively small, which leads to a problem that it is difficult to achieve improvement in processing capability.

Since the heating treatment in the related art disclosed in Japanese Patent Application, Publication No. 2019-61833 is continuous processing of causing an indefinite number of ring-shaped members to pass through a heating section of a coil, it is easy to secure processing capability. However, in this processing method, when the second and subsequent ring-shaped members are introduced into the heating section of the coil, while having the ring-shaped members placed on an upper surface of a support member, the diameter of an inscribed circle of the support member is increased, that is, support claws disposed at three locations in a circumferential direction move to a radially outward side in synchronization therewith. For this reason, during movement, there is a probability that the posture of the ring-shaped members placed on the upper surface of the support member will become unstable, the ring-shaped members will come into contact with the coil, and heating will not be able to be evenly performed.

An object of the present disclosure is to provide an induction heating method and an induction heating apparatus in which heating treatment capacity for a plurality of ring-shaped members is likely to be secured and it is easy to evenly heat the ring-shaped members.

### [Solution to Problem]

An induction heating method for a ring-shaped member according to an aspect of the present disclosure includes a step of supplying a ring-shaped member to a predetermined section serving as a heating target section using an induction coil, and a step of moving the ring-shaped member along a reference axis so as to pass through the predetermined section, the step including controlling contact between the ring-shaped member and a different member by a contact control portion.

An induction heating apparatus for a ring-shaped member according to another aspect of the present disclosure includes an induction coil, a power source device that supplies power to the induction coil, and a conveyance mechanism for moving a ring-shaped member along a reference axis so as to pass through a predetermined section serving as a heating target section using the induction coil, the conveyance mechanism having a contact control portion controlling contact between the ring-shaped member and a different member.

The induction heating method for a ring-shaped member according to the aspect of the present disclosure includes a step of supplying a plurality of ring-shaped members to a heating section of a coil in an electrified state, and a step of causing the plurality of ring-shaped members supplied to the heating section to sequentially pass through the heating section while preventing contact with the coil using a contact prevention means.

The induction heating apparatus for a ring-shaped member according to the aspect of the present disclosure is an apparatus causing a plurality of ring-shaped members to sequentially pass through a heating section of a coil in an electrified state, and the apparatus includes the coil which can be electrified, a supply means for supplying the plurality of ring-shaped members to the heating section of the coil in an electrified state, and a contact prevention means for preventing the ring-shaped members from coming into contact with the coil when the plurality of ring-shaped members supplied to the heating section are caused to pass through the heating section.

A manufacturing method for a ring-shaped member according to another aspect of the present disclosure is a manufacturing method for a metal ring-shaped member, and the manufacturing method includes a step of performing heat treatment with respect to the ring-shaped member by heating the ring-shaped member using the induction heating method for a ring-shaped member according to the aspect of the present disclosure.

A manufacturing method for a bearing according to another aspect of the present disclosure is a manufacturing method for a bearing including a component constituted of a ring-shaped member, and the manufacturing method includes a step of performing heat treatment with respect to the component by heating the component using the induction heating method for a ring-shaped member according to the aspect of the present disclosure.

A manufacturing method for a vehicle according to another aspect of the present disclosure is a manufacturing method for a vehicle including a ring-shaped member, and the manufacturing method includes a step of performing heat treatment with respect to the ring-shaped member by heating the ring-shaped member using the induction heating method for a ring-shaped member according to the aspect of the present disclosure.

A manufacturing method for a vehicle according to another aspect of the present disclosure is a manufacturing method for a mechanical device including a ring-shaped member, and the manufacturing method includes a step of performing heat treatment with respect to the ring-shaped member by heating the ring-shaped member using the induction heating method for a ring-shaped member according to the aspect of the present disclosure.

The induction heating method for a ring-shaped member according to the aspect of the present disclosure is performed, in a heat treatment method for a ring-shaped member including a part-supplying step of conveying a plurality of ring-shaped members, a quenching step of performing quenching processing with respect to the ring-shaped members while conveying the plurality of ring-shaped members which have been conveyed in the part-supplying step, and a tempering step of performing tempering processing with respect to the ring-shaped members while conveying the plurality of ring-shaped members which have completed the quenching processing, for heating the plurality of ring-shaped members to a target temperature when the quenching step and/or the tempering step is performed. In this case, in a series of steps from the part-supplying step to the tempering step, the plurality of ring-shaped members can be conveyed in an axial direction on the same straight line from the first ring-shaped member to the last ring-shaped member.

The induction heating apparatus for a ring-shaped member according to the aspect of the present disclosure is used, in a heat treatment facility including a part-supplying portion that conveys a plurality of ring-shaped members, a quenching portion that performs quenching processing with respect to the ring-shaped members while conveying the plurality of ring-shaped members which have been conveyed from the part-supplying portion, and a tempering portion that performs tempering processing with respect to the ring-shaped members while conveying the plurality of ring-shaped members which have completed the quenching processing in an axial direction, for heating the plurality of ring-shaped members to a target temperature using the quenching portion and/or the tempering portion. In this case, in a series of locations from the part-supplying portion to the tempering portion, the plurality of ring-shaped members can be conveyed in the axial direction on the same straight line from the first ring-shaped member to the last ring-shaped member.

The methods and the structures of the present disclosure can be performed by suitably combining each of the aspects described above within a range having no contradiction.

### [Advantageous Effects of Invention]

According to the induction heating method and the induction heating apparatus for a ring-shaped member according to the aspects of the present disclosure, heating treatment capability of a ring-shaped member is likely to be secured and it is also easy to evenly heat the ring-shaped member.

### [Brief Description of Drawings]

FIG. 1 is a cross-sectional view showing an example of a rolling bearing including an outer ring and an inner ring.
FIG. 2 is a perspective view showing a heat treatment facility including an induction heating apparatus according to a first embodiment.
FIG. 3 is a perspective view schematically showing a situation of induction-heating ring-shaped members according to the first embodiment.
FIG. 4 is a perspective view schematically showing a situation of induction-heating the ring-shaped members according to a second embodiment schematically showing an induction heating apparatus according to the first embodiment.
FIG. 5 is a perspective view schematically showing a situation of induction-heating the ring-shaped members according to a third embodiment.
FIG. 6 is a partially cut perspective view schematically showing a situation of induction-heating the ring-shaped members according to a fourth embodiment.
FIG. 7 is a partially cut perspective view schematically showing a situation of induction-heating the ring-shaped members according to a modification example.
FIG. 8 is a perspective view schematically showing a situation of induction-heating the ring-shaped members according to a fifth embodiment.
FIG. 9 is a perspective view schematically showing a modification example.
FIG. 10 is a partially cut side view showing a situation of induction-heating the ring-shaped members according to a sixth embodiment.
FIG. 11 is a partially cut perspective view showing a situation of induction-heating the ring-shaped members according to a seventh embodiment.
FIG. 12 is a partially cut perspective view showing a situation of induction-heating the ring-shaped members according to an eighth embodiment.
FIG. 13 is a partially cut side view showing a situation of induction-heating the ring-shaped members according to a ninth embodiment.
FIG. 14 is a partially cut side view showing a situation of induction-heating the ring-shaped members according to a tenth embodiment.
FIG. 15 is a partially cut side view showing a situation of induction-heating the ring-shaped members according to an eleventh embodiment.
FIG. 16 is a partially cut side view showing a situation of induction-heating the ring-shaped members according to a twelfth embodiment.
FIG. 17 is a partially cut side view showing a situation of induction-heating the ring-shaped members according to a thirteenth embodiment.
FIG. 18 is a partially cut side view showing a situation of induction-heating the ring-shaped members according to a modification example.
FIG. 19 is a view schematically showing a situation of induction-heating the ring-shaped members according to a fourteenth embodiment.
FIG. 20 is a view schematically showing a situation of induction-heating the ring-shaped members according to a fifteenth embodiment.
FIG. 21 is a view schematically showing a situation of induction-heating the ring-shaped members according to a sixteenth embodiment.
FIG. 22 is a view of a schematic constitution of a motor having a bearing applied thereto.

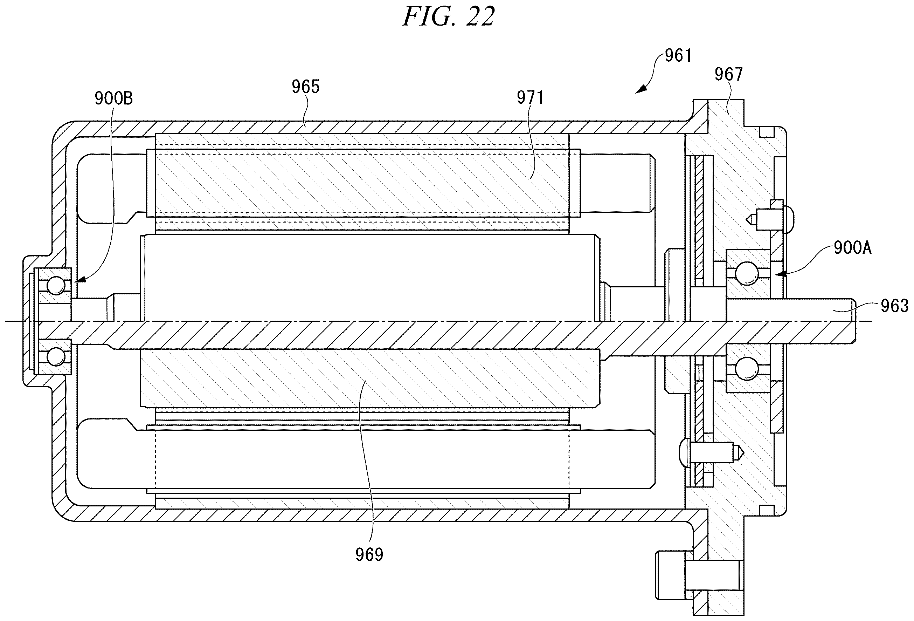

FIG. 22 is a view showing a situation of induction-heating the ring-shaped member according to a first example of an induction heating method for a ring-shaped member in the related art.
FIG. 23 is a view showing a situation of induction-heating the ring-shaped member according to a second example of the induction heating method for a ring-shaped member in the related art.

### [Description of Embodiments]

### [First embodiment]

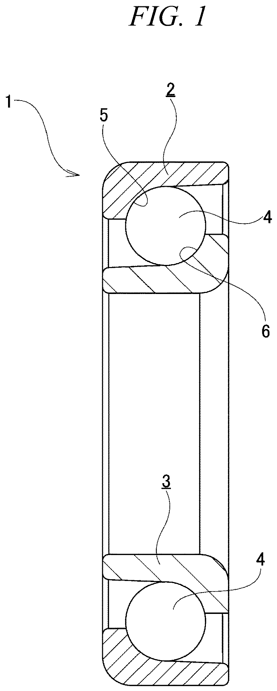

A first embodiment of the present disclosure will be described using FIGS. 1 to 3.

In the present embodiment, as shown in FIG. 1, an outer ring 2 and/or an inner ring 3 of a rolling bearing 1 is subjected to quenching processing and/or tempering processing through induction heating. The outer ring 2 and/or the inner ring 3 corresponds to a ring-shaped member Mr.

The ring-shaped member is not limited to the outer ring 2 and/or the inner ring 3 of the rolling bearing 1. An arbitrary metal ring-shaped member can be adopted as a target. According to an example, an outer ring or an inner ring of a rolling bearing having a structure different from that of the example shown in FIG. 1 or a sliding bearing constituted of a single component or a plurality of components is adopted as a target. In addition, a ring-shaped member constituting a vehicle or a mechanical device is adopted as a target. For example, in addition to the quenching processing and the tempering processing, target heat treatment may include various kinds of heat treatment such as annealing processing and normalizing processing.

In the present embodiment, the rolling bearing 1 is constituted of a single-row angular contact ball bearing and includes the outer ring 2, the inner ring 3, and a plurality of rolling bodies 4.

The outer ring 2 is constituted of a hard metal such as a bearing steel or a carbon soaked steel and has an angular-type outer ring raceway 5 on an inner circumferential surface. The inner ring 3 is constituted of a hard metal such as a bearing steel or a carbon soaked steel and has an angular-type inner ring raceway 6 on an outer circumferential surface. The plurality of rolling bodies 4 are constituted of balls and are turnably disposed between the outer ring raceway 5 and the inner ring raceway 6. Each of the rolling bodies 4 is constituted of a hard metal such as a bearing steel or a carbon soaked steel, or a ceramic.

When the outer ring 2 is made, first, a metal material is subjected to forging, and an approximate shape of the outer ring 2 is molded. Thereafter, the inner circumferential surface is subjected to grinding, and the outer ring raceway 5 is formed. Next, the outer ring 2 is subjected to the quenching processing and the tempering processing. In addition, when the inner ring 3 is made, first, a metal material is subjected to forging, and an approximate shape of the inner ring 3 is molded. Thereafter, the outer circumferential surface is subjected to grinding, and the inner ring raceway 6 is formed. Next, the inner ring 3 is subjected to the quenching processing and the tempering processing.

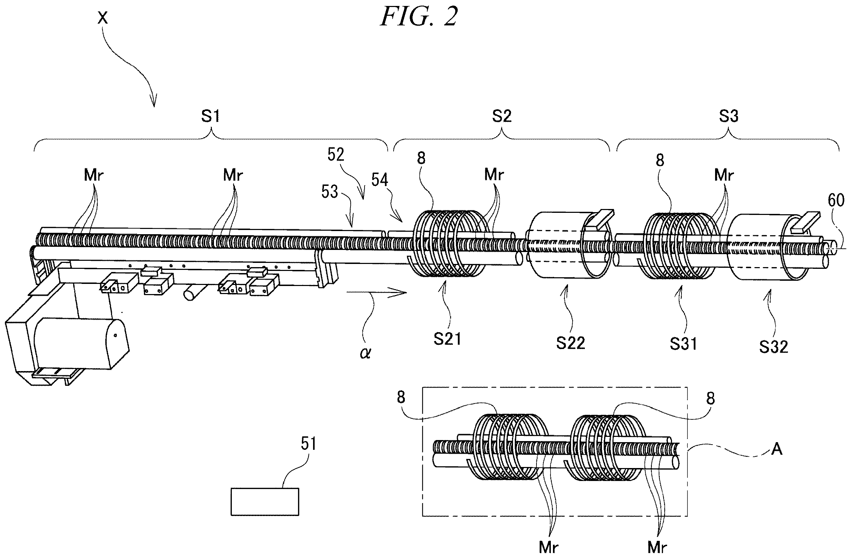

In the present embodiment, with respect to the outer ring 2 and/or the inner ring 3, the quenching processing and the tempering processing of the ring-shaped member Mr are performed using a heat treatment facility X shown in FIG. 2. Such processing includes a heating step of heating the ring-shaped member Mr (workpiece) to a target temperature, and a cooling step of cooling the heated ring-shaped member Mr. For example, the target temperature is a temperature suitably selected from a temperature range at which quenching can be performed in the case of the quenching processing and is a temperature suitably selected from a temperature range at which tempering can be performed in the case of the tempering processing.

The heat treatment facility X shown in FIG. 2 is a facility for performing a heat treatment method for a plurality of ring-shaped members Mr and includes a part-supplying portion S1, a quenching portion S2, and a tempering portion S3. The part-supplying portion S1 performs a part-supplying step of conveying a plurality of ring-shaped members Mr, which have been coaxially disposed, in an axial direction toward a heat treatment unit. The quenching portion S2 performs a quenching step of performing the quenching processing with respect to a plurality of ring-shaped members Mr, which have been conveyed from the part-supplying portion S 1, while conveying the ring-shaped members Mr in the axial direction. The tempering portion S3 performs a tempering step of performing the tempering processing with respect to a plurality of ring-shaped members Mr, which have completed the quenching processing, while conveying the ring-shaped members Mr in the axial direction.

The quenching portion S2 has a heating portion (heating section) S21 for induction-heating a plurality of ring-shaped members Mr to a target temperature, and a cooling portion S22 for cooling a plurality of ring-shaped members Mr held at a target temperature for a predetermined time.

The tempering portion S3 has a heating portion (heating section) S31 for induction-heating a plurality of ring-shaped members Mr which have been subjected to the quenching processing to a target temperature, and a cooling portion S32 for cooling a plurality of ring-shaped members Mr held at a target temperature for a predetermined time.

For example, cooling in each of the cooling portions S22 and S32 is performed by applying a coolant discharged from a cooling jacket to the ring-shaped members Mr. In addition, cooling in the cooling portion S22 can also be performed while straightening heat treatment deformation of a plurality of ring-shaped members Mr as necessary. Regarding a straightening method at this time, for example, it is possible to employ a suitable method, such as a method for feeding the ring-shaped members Mr in the axial direction while pressurizing them from an outer diameter side using a straightening roller, or a method for causing the ring-shaped members Mr to pass through an inward side of a straightening die while feeding them. In addition, after cooling, the coolant which has adhered to the ring-shaped members Mr can be blown off by air blowing.

According to an example, the heat treatment facility X is constituted such that a plurality of ring-shaped members Mr are conveyed in the axial direction on the same straight line from the first ring-shaped member to the last ring-shaped member in a series of a plurality of processing portions from the part-supplying portion S1 to the tempering portion S3. That is, in the heat treatment method of the present example, in a series of steps from the part-supplying step to the tempering step, a plurality of ring-shaped members Mr are conveyed in the axial direction on the same straight line along a reference axis 60 from the first ring-shaped member to the last ring-shaped member.

The heat treatment facility is not limited to the constitution shown in FIG. 2. According to another example, it can have a suitable constitution. For example, the heat treatment facility can have a constitution in which each of the part-supplying portion, the quenching portion, and the tempering portion is not disposed on the same straight line. Alternatively, the heat treatment facility can have a constitution in which the quenching portion and the tempering portion are disposed at places further apart from each other than those of the constitution shown in FIG. 2. For example, the reference axis (conveyance axis) 60 is set for each step, or a common reference axis (conveyance axis) 60 is set for a plurality of steps. The reference axis (conveyance axis) 60 may include a curved part or a bent part. Conveyance may include movement in a direction intersecting the axial direction.

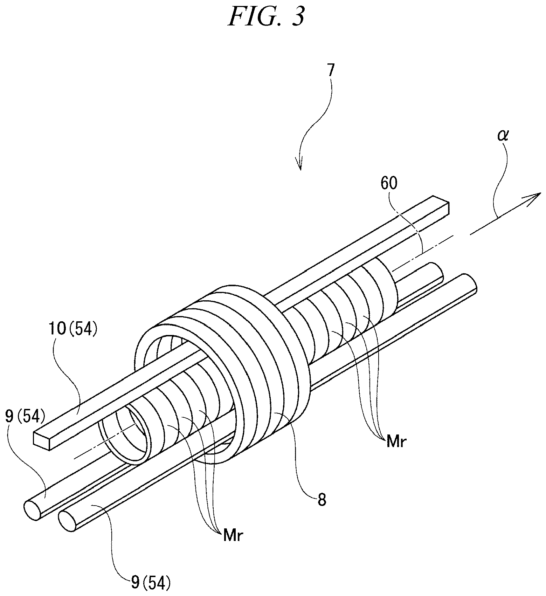

In the present embodiment, in at least one of the heating portion S21 of the quenching portion S2 and/or the heating portion S31 of the tempering portion S3, as shown in FIG. 3, an induction heating apparatus 7 is provided.

The induction heating apparatus 7 induction-heats each of a plurality of ring-shaped members Mr to a target temperature. Each of the ring-shaped members Mr is induction-heated when the ring-shaped members Mr sequentially pass through a facing region (a heating target section, a heating section) of an induction heating coil (induction coil, coil) 8 in an electrified state.

The facing region (heating section) of the coil 8 indicates a region in which workpieces face the coil 8 and are induction-heated by the coil 8. A plurality of ring-shaped members Mr (workpieces) move along the reference axis 60 and pass through the heating section.

According to an example, a movement direction (conveyance direction) of a plurality of ring-shaped members Mr in the heating section is a horizontal direction (a direction of the arrow α in FIG. 3). According to another example, the movement direction (conveyance direction) of the ring-shaped members Mr in the heating section can be a direction which is inclined with respect to the horizontal direction, or a vertical direction.

As shown in FIG. 2, the induction heating apparatus 7 includes the coils 8 which can be electrified, a power source unit 51 which supplies power (high-frequency current or the like) to the coils 8, and a conveyance mechanism 52 which moves ring-shaped members along the reference axis 60. The conveyance mechanism 52 can include a supply portion (feeder) 53 which supplies a plurality of ring-shaped members Mr to the heating section. In addition, the conveyance mechanism 52 includes a contact control portion 54 which controls contact between ring-shaped members and a different member. Examples of different member include the coils 8 and/or members disposed between the coils 8 and ring-shaped members. According to an example, when a plurality of ring-shaped members Mr pass through the heating section, the contact control portion 54 functions as a contact prevention means for preventing the ring-shaped members Mr from coming into contact with the coils 8 or different member.

In the present embodiment, the coils 8 are each constituted to have a substantially cylindrical shape. According to an example, the coils are supported in a state in which the coils 8 are disposed such that the axial direction thereof extends along the reference axis 60 in the horizontal direction. Inner diameters of the coils 8 are larger than outer diameters of the ring-shaped members Mr (workpieces). In the present embodiment, the heating section is a radially inward region of the coils 8. The heating section corresponds to a spatial region which is substantially surrounded by the coils 8. The length of the heating section corresponds to effective lengths of the coils 8.

The inner diameters of the coils 8 are each set to have a size such that the radially inward sides of the coils 8 allow the ring-shaped members Mr to pass therethrough in the axial direction and the contact control portion 54 (for example, two rollers 9 and a restraining member 10) can be disposed. The power source unit 51 (power for electrification) is connected to the coils 8. The amount of electrification (current value or the like) of the coils 8 is controlled by the power source unit (power for electrification) 51.

In the example shown in FIG. 2, one coil 8 is disposed in each of the quenching portion S2 and the tempering portion S3. According to another example, the number of coils 8 provided in the induction heating apparatus 7 can be two or larger. For example, as shown in the part A surrounded by a dot-dashed line in FIG. 2, a plurality of (two in the illustrated example) coils can be installed in one thermal section. In this case, a plurality of coils can be connected to one power source in parallel or in series, and the amount of electrification of each of the coils can be controlled. Alternatively, a plurality of coils can be respectively connected to a plurality of power sources which are independent from each other, and the amount of electrification of each of the coils can be controlled independently and individually.

Axial lengths, the number of windings, the inner diameters, the amounts of electrification, and the like of the coils 8 are adjusted such that the ring-shaped members Mr can be heated to a target temperature in consideration of speeds and times of the ring-shaped members Mr passing through the heating section of the coils 8, and sizes and the like of the ring-shaped members Mr.

The conveyance mechanism 52 can have an arbitrary constitution in which the ring-shaped members Mr can be moved along the reference axis 60 so as to pass through a predetermined section serving as a heating target section using the coils 8. The supply portion 53 of the conveyance mechanism 52 can have an arbitrary constitution in which a plurality of ring-shaped members Mr can be supplied to the heating section of the coils 8. According to an example, the conveyance mechanism 52 can have a constitution in which a plurality of ring-shaped members Mr are sequentially supplied to the heating section in a state of being apart from each other in the axial direction. According to another example, as shown in FIG. 3, the supply portion 53 can have a constitution in which a plurality of ring-shaped members Mr are supplied to the heating section in a state of not being substantially apart from each other in the axial direction. According to an example, a plurality of ring-shaped members Mr move in the heating section in a state of being substantially close to each other (close contact state). According to another example, a plurality of ring-shaped members Mr move in the heating section in a state of being apart from each other. According to an example, a plurality of ring-shaped members Mr are continuously supplied to the heating section. According to another example, a plurality of ring-shaped members Mr are intermittently supplied to the heating section. According to an example, in the heating section, the movement speed of a plurality of ring-shaped members is substantially constant. According to another example, in the heating section, the movement speed of a plurality of ring-shaped members changes. Examples of movement of each of a plurality of ring-shaped members can include a stop period inside the heating section and a movement period inside the heating section.

In the present embodiment, the contact control portion 54 includes guide members made of an insulating material for guiding movement of a plurality of ring-shaped members Mr. Here, the reason why the guide members are made of an insulating material is to prevent high-frequency energy of the coils 8 from being spent for induction heating of the guide members such that the ring-shaped members Mr can be efficiently induction-heated. In the present example, the guide members each have a structure which does not continuously come into contact with the same location in a plurality of ring-shaped members Mr when the ring-shaped members Mr pass through the heating section.

Specifically, the contact control portion 54 includes two rollers 9 serving as guide members. Each of the two rollers 9 extends in a direction along the reference axis 60 (a passing direction, the direction of the arrow α in FIG. 3). Each of the two rollers 9 rotates around its axis. Rotation directions of the two rollers 9 are set to be the same.

When a plurality of ring-shaped members Mr pass through the heating section, the two rollers 9 are used for moving the ring-shaped members Mr in the axial direction with respect to the two rollers 9 while the ring-shaped members Mr are rotated on their axes by rotating the two rollers 9 in the same direction as each other in a state in which a plurality of ring-shaped members Mr whose respective axial directions are aligned with the passing direction are placed on the two rollers 9.

More specifically, the two rollers 9 are each constituted to have a solid columnar shape using an insulating material such as a ceramic and are disposed apart from each other with an interval smaller than the outer diameters of a plurality of ring-shaped members Mr therebetween. Intermediate portions of the two rollers 9 in an extension direction are axially inserted through a lower portion of the radially inward region (the heating section of the coils 8). The two rollers 9 can be rotatively driven at the same speed in the same direction as each other by a rotative driving mechanism (not shown). The rotation direction and the speed are merely examples and are not limited thereto.

According to an example, a propulsive force for moving a plurality of ring-shaped members Mr in the axial direction with respect to the two rollers 9 is generated on the basis of a contact force acting on each of the ring-shaped members Mr from the two rollers 9. For this reason, the two rollers 9 are disposed in a manner of being non-parallel with each other. Specifically, the two rollers 9 are disposed in a manner of being slightly (for example, 0.5° to 5.0°, preferably 1° or so) inclined with respect to each other (at an angle of inclination with respect to a parallel state). During rotation of the two rollers 9, a skew occurs in each of the ring-shaped members Mr with respect to the two rollers 9. A contact force (frictional force) having a component in the direction of the arrow α in FIG. 3 is generated with respect to each of the ring-shaped members Mr from the two rollers 9, and a propulsive force is generated due to the contact force. That is, in the present example, each of the rollers 9 functions as a feeding roller. The foregoing numerical values are merely examples, and the embodiment is not limited to the foregoing numerical values.

Additionally and/or alternatively, a constitution having a spiral groove on the outer circumferential surface of at least any one roller of the two rollers 9 it is possible to employ. In this case, during rotation of the two rollers 9, a contact force (engagement force) having the component in the direction of the arrow α in FIG. 3 acts on contact portions between the spiral groove and the ring-shaped members Mr, and a propulsive force is generated due to the contact force.

According to another example, a propulsive force can be generated by another drive device such as a workpiece feeding device (not shown) disposed on an upstream side of a heat treatment step.

In the present embodiment, parts of the two rollers 9 function as the supply portion 53. In the two rollers 9, a part positioned on the upstream side (the left side in FIG. 3) of the heat treatment step from the coils 8 becomes a part of the constitution of the supply portion 53. From the upstream side of the heat treatment step, a plurality of ring-shaped members Mr are sequentially fed in the axial direction on the part positioned on the upstream side (the left side in FIG. 3) of the heat treatment step from the coils 8 in the two rollers 9. Further, the ring-shaped members Mr move in the axial direction and are supplied to the heating section due to a propulsive force acting on each of the ring-shaped members Mr from the two rollers 9. That is, the two rollers 9 not only play roles as guide members but also play roles as supply means.

In the present embodiment, the contact control portion 54 includes the restraining member 10 serving as a guide member. The restraining member 10 closely faces a plurality of ring-shaped members Mr placed on the two rollers 9 from above. The ring-shaped members Mr are disposed between the two rollers 9 and the restraining member 10.

According to an example, the restraining member 10 has a rod shape extending along the reference axis 60 (the passing direction (the direction of the arrow α in FIG. 3)) in an axial range in which the two rollers 9 are present. An intermediate portion of the restraining member 10 in the extension direction is axially inserted through an upper portion of the radially inward region (the heating section of the coils 8).

In the present embodiment, a plurality of ring-shaped members Mr are induction-heated by the induction heating apparatus 7. First, in a state in which the two rollers 9 are rotated at the same speed in the same direction as each other, from the upstream side of the heat treatment step, a plurality of ring-shaped members Mr are continuously fed in the axial direction and are mounted on the part positioned on the upstream side (the left side in FIG. 3) of the heat treatment step from the coils 8 in the two rollers 9. Further, each of the ring-shaped members Mr moves along the reference axis (axial direction) 60 with respect to the two rollers 9 due to a propulsive force while rotating on its axis in response to rotation of the two rollers 9. Accordingly, each of the ring-shaped members Mr is fed in the axial direction to the radially inward region (the heating section of the coils 8) and then passes through the heating section in the axial direction. In the heating section, central axes of a plurality of ring-shaped members Mr are disposed along the reference axis 60. In the heating section, the ring-shaped members Mr move along the central axes of the ring-shaped members Mr. In the heating section, the outer circumferential surfaces of the ring-shaped members Mr are disposed in a manner of facing the coils 8. In the process of passing through the heating section, an eddy current is generated in each of the ring-shaped members Mr, and the ring-shaped members Mr are heated to a target temperature. According to an example, without substantially having an interval between the ring-shaped members Mr adjacent to each other, each of the ring-shaped members Mr moves in the axial direction on the two rollers 9. According to another example, each of the ring-shaped members Mr moves in the axial direction on the two rollers 9 with a predetermined interval between the ring-shaped members Mr adjacent to each other.

When a plurality of ring-shaped members Mr tend to rise with respect to the two rollers 9 due to vibration or the like generated while the ring-shaped members Mr move in the axial direction on the two rollers 9, the ring-shaped members Mr come into contact with a lower surface of the restraining member 10 so that they are prevented from rising any further. That is, a plurality of ring-shaped members Mr are prevented from coming out from above the two rollers 9.

In the present embodiment, high heating treatment capability with respect to a plurality of ring-shaped members Mr is secured by performing processing of causing an indefinite number of ring-shaped members Mr to sequentially pass through the heating section of the coils 8, that is, continuous processing.

In the present embodiment, in a heating space, a plurality of ring-shaped members Mr are prevented from coming into contact with the coils 8 due to the two rollers 9 and the restraining member 10. For this reason, in the ring-shaped members Mr, occurrence of uneven heating distribution due to contact with the coils 8 is avoided.

In the present embodiment, in induction heating of the ring-shaped members Mr, the ring-shaped members Mr move in the axial direction while rotating on their axes by the two rollers 9. The ring-shaped members Mr moves along the reference axis 60 while rotating around the reference axis 60 on the two rollers 9. For this reason, the two rollers 9 do not continuously come into contact with the same location in the ring-shaped members Mr (the same location in a circumferential direction) and the ring-shaped members Mr move in the axial direction. Specifically, in the ring-shaped members Mr, the ring-shaped members Mr move in the axial direction while contact points with respect to the two rollers 9 continuously change. In the heating section, circumferential positions where the ring-shaped members Mr come into contact with the rollers 9 change. Therefore, heat transfer from the ring-shaped members Mr to the two rollers 9 is prevented from being concentrated in a particular location in the ring-shaped members Mr.

In the present embodiment, contact between the ring-shaped members Mr and the restraining member 10 does not occur continuously in the heating section, and even if it occurs, it only occurs sporadically. In addition, since the ring-shaped members Mr rotate on their axes, the restraining member 10 does not continuously come into contact with the same location in the ring-shaped members Mr. The restraining member 10 does not continuously come into contact with the same location in the ring-shaped members Mr (the same location in the circumferential direction) and the ring-shaped members Mr move in the axial direction. Therefore, heat transfer from the ring-shaped members Mr to the restraining member 10 is prevented from being concentrated in a particular location in the ring-shaped members Mr.

Therefore, in the present embodiment, occurrence of uneven heating distribution due to contact with different member is curbed in the ring-shaped members Mr. For example, problems such as a partial drop in temperature of a particular location in the ring-shaped members Mr due to contact with different member, and partial change in characteristics of a particular location in the ring-shaped members Mr (for example, degradation in hardness, or the like) are prevented. Namely, in the present embodiment, the ring-shaped members Mr can be more evenly heated.

In a modification example of the present embodiment, two rollers can each have a hollow structure internally having a passage. In this case, in induction heating of the ring-shaped members, the two rollers can be cooled by causing a coolant to go through the passage.

In another modification example of the present embodiment, the restraining member 10 can be omitted. Alternatively, in place of the restraining member 10, it is possible to employ a constitution including, as a guide member, a spiral member having a spiral shape, a tube member (made of a quartz glass, a ceramic, a non-magnetic SUS, or the like) having a cylindrical shape, or the like surrounding parts around the two rollers 9 and a plurality of ring-shaped members Mr.

### [Second embodiment]

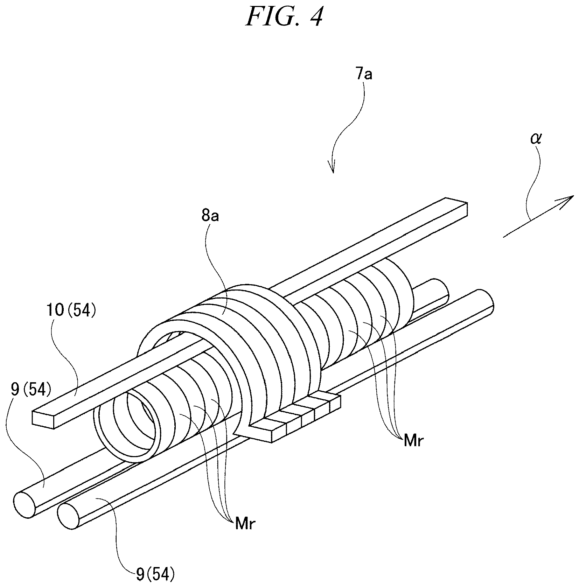

A second embodiment of the present disclosure will be described using FIG. 4.

In the present embodiment, as shown in FIG. 4, a shape of coil 8a differ from those of the first embodiment. That is, as shown in FIG. 4, the coil 8 has a saddle shape or a partially cylindrical shape facing only parts (the upward side part in the illustrated example) on the outer circumferential surfaces of a plurality of ring-shaped members Mr in the circumferential direction. In the present embodiment, assembling of an induction heating apparatus 7a is executed relatively easily.

In the present embodiment, the coil 8a faces only parts on the outer circumferential surfaces of a plurality of ring-shaped members Mr in the circumferential direction. Parts on the outer circumferential surfaces of the ring-shaped members Mr face an opening region (non-coil region) of the coil 8a in the circumferential direction. In the heating section, a partial region in the circumferential direction corresponding to the opening region of the coil 8a serves as a partial low-heating region. Meanwhile, a plurality of ring-shaped members Mr pass through the heating section of the coil 8a along the central axes while rotating around the central axes. For this reason, an influence of the low-heating region is substantially avoided. The ring-shaped members Mr are induction-heated by the coil 8a over the whole circumferences of the ring-shaped members Mr. Other constitutions and operational effects of the present embodiment are similar to those of the first embodiment.

### [Third embodiment]

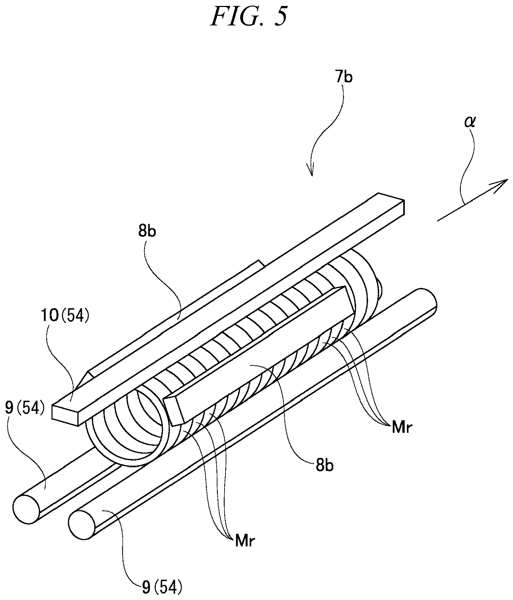

A third embodiment of the present disclosure will be described using FIG. 5.

In the present embodiment, shapes of coils 8b differ from those of the first embodiment. That is, in the present embodiment, the coils 8b are constituted of bar coils (plate-shaped coils) extending in the axial direction of a plurality of ring-shaped members Mr. The coils 8b are disposed in at least one location (two locations on the upward side in the illustrated example) in the circumferential direction at positions facing the outer circumferential surfaces of a plurality of ring-shaped members Mr. In the present embodiment, assembling of an induction heating apparatus 7b is executed relatively easily.

In the present embodiment, the coils 8b face only parts on the outer circumferential surfaces of a plurality of ring-shaped members Mr in the circumferential direction. Parts on the outer circumferential surfaces of the ring-shaped members Mr face a region where the coils 8b are not disposed (non-coil region) in the circumferential direction. In the heating section, a partial region in the circumferential direction corresponding to the region where the coils 8b are not disposed serves as a partial low-heating region. Meanwhile, a plurality of ring-shaped members Mr pass through the heating section of the coils 8b along the central axes while rotating around the central axes. For this reason, an influence of the low-heating region is substantially avoided. The ring-shaped members Mr are induction-heated by the coils 8b over the whole circumferences of the ring-shaped members Mr. Other constitutions and operational effects related to the present embodiment are similar to those of the first embodiment and/or other embodiments.

### [Fourth embodiment]

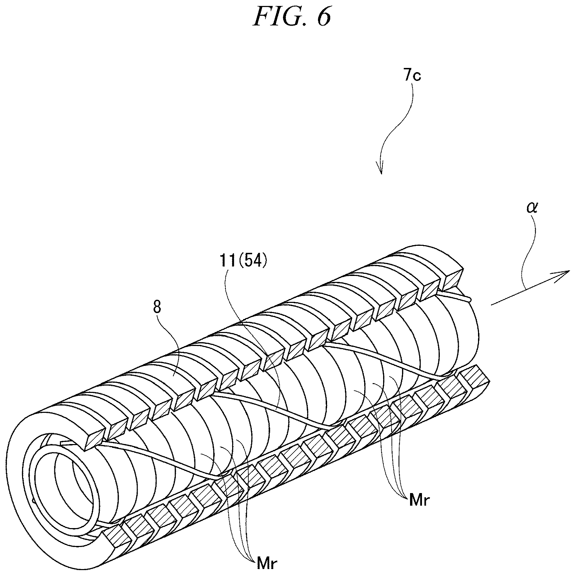

A fourth embodiment of the present disclosure will be described using FIG. 6.

According to an example, similar to the first embodiment, a direction in which a plurality of ring-shaped members Mr pass through the heating section is the horizontal direction along the reference axis (the direction of the arrow α in FIG. 6). For this reason, the coil 8 having a cylindrical shape are held in a posture in which the axial directions thereof are aligned in the horizontal direction. According to another example, as will be described below, the movement direction (conveyance direction) of the ring-shaped members Mr in the heating section can be a direction which is inclined with respect to the horizontal direction, or the vertical direction.

In the present embodiment, the contact control portion 54 includes a spiral member 11. In an induction heating apparatus 7c, the contact control portion 54 includes the spiral member 11 serving as a guide member. The spiral member 11 extends in a direction in which a plurality of ring-shaped members Mr pass through the radially inward region (heating section) and has a spiral shape. The spiral member 11 is used for guiding a plurality of ring-shaped members Mr in the axial direction at the radially inward side of the spiral member 11 when the plurality of ring-shaped members Mr pass through the heating section.

Specifically, the spiral member 11 is constituted of an insulating material such as a ceramic. According to an example, the spiral member 11 has a spiral shape, such as a wire rod wound in a spiral shape, or a spiral shape, such as a plurality of wire rods wound in a spiral shape in parallel. Specifications such as the number of threads that is the number of wire rods constituting the spiral member 11, the axial pitch of the wire rods, and the inner diameter of the spiral member 11 can be arbitrarily set. For example, the specifications of the spiral member 11 are set such that the ring-shaped members Mr can be prevented from coming out from between wire rods adjacent to each other in the axial direction and movement of a plurality of ring-shaped members Mr in the axial direction can be smoothly guided by the inner circumferential surface of the spiral member 11. For example, the number of threads of the spiral member 11 is three. No matter which axial position the ring-shaped members Mr are present at the radially inward side of the spiral member 11, the wire rods are present in three locations at equal intervals in the circumferential direction around the ring-shaped members.

In the present embodiment, the spiral member 11 is coaxially disposed at the radially inward sides of the coils 8.

In the present embodiment, movement of the ring-shaped members Mr in the heating section is based on the supply portion supplying the ring-shaped members Mr to the heating section. According to an example, the supply portion is constituted of a feeding device (workpiece feeding device) disposed on the upstream side of the heat treatment step. According to an example, the feeding device supplies a plurality of ring-shaped members Mr without causing them to be apart from each other in the axial direction. For example, a propulsive force of a plurality of ring-shaped members Mr is generated by continuously pressurizing the ring-shaped members Mr. According to another example, the feeding device supplies a plurality of ring-shaped members Mr in a state of being separated from each other. Regarding the feeding device, for example, it is possible to employ the same device as the part-supplying portion S 1 in FIG. 2, a device of a type feeding a plurality of ring-shaped members by sandwiching them between belts, or the like.

During induction heating by the induction heating apparatus 7c, a plurality of ring-shaped members Mr are fed to the heating section by the supply portion. In a state of having the central axes (axial direction) of the plurality of ring-shaped members Mr along the reference axis (the passing direction, the direction of the arrow α), the supply portion sequentially feeds the plurality of ring-shaped members Mr to the radially inward side of the spiral member 11. The ring-shaped members Mr move in the axial direction at the radially inward side of the spiral member 11 and pass through the heating section of the coil 8. In the heating section, the outer circumferential surfaces of the ring-shaped members Mr are disposed in a manner of facing the coil 8. Further, in the heating section, an eddy current is generated in each of the ring-shaped members Mr, and the ring-shaped members Mr are heated so as to reach a target temperature.

In the present embodiment, in the heating section, the spiral member 11 prevents a plurality of ring-shaped members Mr from coming into contact with the coil 8. For this reason, in the ring-shaped members Mr, occurrence of uneven heating distribution due to contact with the coil 8 is avoided.

In the present embodiment, in induction heating of the ring-shaped members Mr, the ring-shaped members Mr are guided by the inner circumferential surface of the spiral member 11 having a spiral shape and move in the axial direction. For this reason, in the ring-shaped members Mr, the contact point with respect to the spiral member 11 continuously changes. In the heating section, circumferential positions where the ring-shaped members Mr come into contact with the spiral member 11 change. Therefore, heat transfer from the ring-shaped members Mr to the spiral member 11 is prevented from being concentrated in a particular location in the ring-shaped members Mr, and occurrence of uneven heating distribution is curbed. For example, problems such as a partial drop in temperature of a particular location in the ring-shaped members Mr due to contact with different member such as the spiral member 11, and partial change in characteristics of a particular location in the ring-shaped members Mr (for example, degradation in hardness, or the like) are prevented. Namely, in the present embodiment as well, the ring-shaped members Mr can be more evenly heated.

In the present embodiment, the ring-shaped members Mr can be evenly heated without using a mechanism for rotating the ring-shaped members Mr on their axes. For this reason, the structure of the induction heating apparatus can be simplified.

In the present embodiment, the radial thickness of the spiral member 11 disposed between the inner circumferential surfaces of the coils 8 and the outer circumferential surfaces of a plurality of ring-shaped members Mr is set to be relatively small. In the present embodiment, compared to the structure of the first embodiment, the distance between the inner circumferential surface of the coil 8 and the outer circumferential surfaces of a plurality of ring-shaped members Mr can be reduced. This is advantageous in securing induction heating efficiency of a plurality of ring-shaped members Mr.

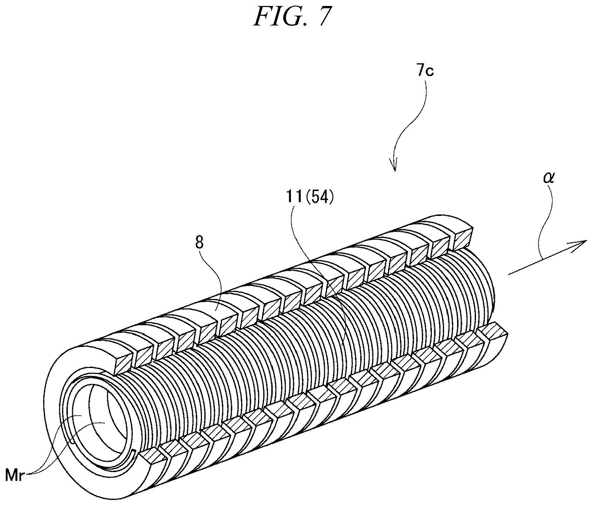

In the present embodiment, as shown in FIG. 6, the axial pitch of the wire rods constituting the spiral member 11 is set to be larger than the widths of the ring-shaped members Mr in the axial direction. In a modification example of the present embodiment, as shown in FIG. 7, the axial pitch of the wire rods can be made smaller than the widths of the ring-shaped members Mr in the axial direction. In this case, the ring-shaped members Mr are more reliably prevented from coming out from between wire rods adjacent to each other in the axial direction. Here, as the axial pitch of the wire rods becomes smaller, the amount of wire rods used increases and material costs rise. For this reason, from the viewpoint of restraining material costs, it is preferable that the axial pitch of the wire rods be increased as much as possible with a range in which the ring-shaped members Mr can be effectively prevented from coming out from between wire rods adjacent to each other in the axial direction. Other constitutions and operational effects related to the present embodiment are similar to those of the first embodiment and/or other embodiments.

Alternatively, in the present embodiment, the movement direction (conveyance direction) of the ring-shaped members Mr in the heating section can be a direction which is inclined with respect to the horizontal direction, or the vertical direction. That is, a form of moving a plurality of ring-shaped members in the axial direction through the radially inward side of the spiral member can also be applied when the passing direction, that is, the axial direction of the coils and the spiral member is set to a direction which is inclined with respect to the horizontal direction, or the vertical direction. When a plurality of ring-shaped members are moved downward from above, gravity can be utilized as a propulsive force for moving the plurality of ring-shaped members. A form of moving a plurality of ring-shaped members in the axial direction through the radially inward side of the spiral member can also be applied to the induction heating methods and the induction heating apparatuses in the related art disclosed in Japanese Unexamined Patent Application, First Publication No. 2015-67880 and Japanese Unexamined Patent Application, First Publication No. 2019-61833.

### [Fifth embodiment]

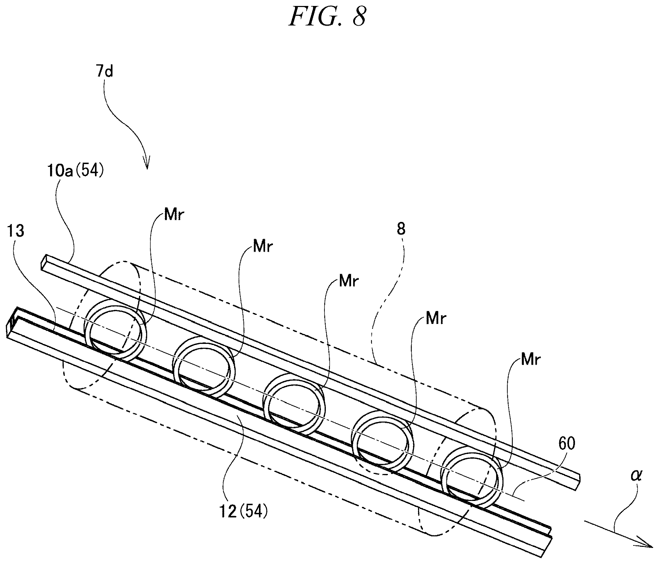

A fifth embodiment of the present disclosure will be described using FIG. 8.

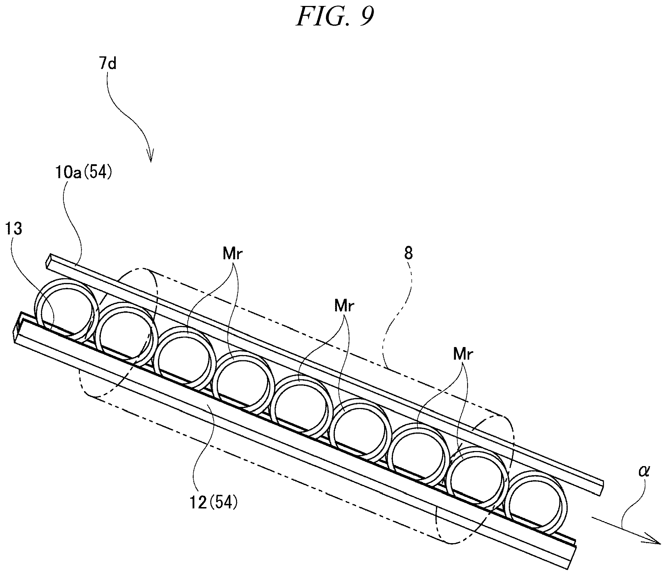

In the present embodiment, in the heating section, the reference axis 60 is set in a manner of being inclined with respect to the horizontal direction. The direction in which a plurality of ring-shaped members Mr pass through the heating section is a direction which is inclined with respect to the horizontal direction and is directed downward from above (the direction along the reference axis 60, the direction of the arrow α in FIG. 8). The coil 8 having a cylindrical shape are held in a posture in which the axial directions thereof are aligned in the direction along the reference axis 60 (the passing direction (the direction of the arrow α)). In FIG. 8, and FIG. 9 showing a modification example, the coil 8 is indicated by two dot-dashed lines.

In the present embodiment, the contact control portion 54 includes a guide rail 12. In an induction heating apparatus 7d, the contact control portion 54 includes, as a guide member, the guide rail 12 extending along the reference axis 60 (passing direction). The guide rail 12 is disposed such that the outer circumferential surfaces of a plurality of ring-shaped members Mr are supported and guides movement of the plurality of ring-shaped members Mr in the heating section. In the heating section, a plurality of ring-shaped members Mr move while rolling on the guide rail 12.

In the present example, the guide rail 12 is constituted of an insulating material such as a ceramic and extends along the reference axis 60 (the passing direction (the direction of the arrow α)). According to an example, the guide rail 12 has a guide groove 13 constituted of one bottom wall and two side walls. The guide groove 13 extends along the reference axis 60 (the passing direction (the direction of the arrow α)) and opens upward in the guide rail 12. An intermediate portion of the guide rail 12 in the extension direction is axially inserted through the lower portions of the radially inward region (the heating section of the coil 8).

In the present embodiment, the contact control portion 54 includes a restraining member 10a serving as a guide member. The restraining member 10a is disposed in a manner of closely facing a plurality of ring-shaped members Mr, which roll on the guide rail 12, more specifically on a bottom surface of the guide groove 13, from above. The ring-shaped members Mr are disposed between the guide rail 12 and the restraining member 10a.

According to an example, the restraining member 10a has a rod shape extending along the reference axis 60 (the passing direction (the direction of the arrow α)) in an axial range in which the guide rail 12 is present. According to another example, the restraining member 10a can have various shapes. An intermediate portion of the restraining member 10a in the extension direction is axially inserted through the upper portions of the radially inward region (the heating section of the coil 8).

During induction heating by the induction heating apparatus 7d, a plurality of ring-shaped members Mr are sequentially supplied to a top portion of the guide rail 12 by the supply portion. The supply portion sequentially feeds a plurality of ring-shaped members Mr to the heating section in a state in which the central axes (axial direction) of the plurality of ring-shaped members Mr intersect (are substantially orthogonal to) the reference axis (the passing direction, the direction of the arrow α). According to an example, a downward side part of each of the ring-shaped members Mr is engaged with the guide groove 13. In the heating section, side surfaces of the ring-shaped members Mr are disposed in a manner of facing the coil 8. The ring-shaped members Mr move while rolling on the reference axis 60 (the passing direction (the direction of the arrow α)) along the guide groove 13 due to operation of gravity or the like and pass through the heating section of the coil 8. In the heating section, an eddy current is generated in each of the ring-shaped members Mr, and the ring-shaped members Mr are heated so as to reach a target temperature. According to an example, when the ring-shaped members Mr roll along the guide groove 13, the axial direction of the ring-shaped members Mr is the horizontal direction. According to another example, the axial direction of the ring-shaped members Mr can be a direction which is slightly inclined with respect to the horizontal direction.

When the ring-shaped members Mr tend to rise with respect to the bottom surface of the guide groove 13 due to vibration or the like generated while a plurality of ring-shaped members Mr roll along the guide groove 13, the ring-shaped members Mr come into contact with the lower surface of the restraining member 10a so that they are prevented from rising any further. That is, a plurality of ring-shaped members Mr are prevented from coming out from the guide groove 13.

In the present embodiment, in the heating space, a plurality of ring-shaped members Mr are prevented from coming into contact with the coil 8 due to the guide rail 12 and the restraining member 10a. For this reason, in the ring-shaped members Mr, occurrence of uneven heating distribution due to contact with the coil 8 is avoided.

In the present embodiment, in induction heating of the ring-shaped members Mr, the ring-shaped members Mr move while rolling on the guide rail 12. When rolling on the guide rail 12, parts (lower surfaces) on the outer circumferential surfaces of the ring-shaped members Mr come into contact with the bottom surface of the guide groove 13. The contact point between the ring-shaped members Mr and the guide rail 12 continuously changes. In the heating section, circumferential positions where the ring-shaped members Mr come into contact with the guide rail 12 change. Therefore, heat transfer from the ring-shaped members Mr to the guide rail 12 is prevented from being concentrated in a particular location in the ring-shaped members Mr.

In the present embodiment, contact between the ring-shaped members Mr and the restraining member 10a does not occur continuously in the heating section, and even if it occurs, it only occurs sporadically. In addition, since the ring-shaped members Mr roll, the restraining member 10a does not continuously come into contact with the same location in the ring-shaped members Mr. The restraining member 10a does not continuously come into contact with the same location in the ring-shaped members Mr (the same location in the circumferential direction) and the ring-shaped members Mr move in the axial direction. Therefore, heat transfer from the ring-shaped members Mr to the restraining member 10a is prevented from being concentrated in a particular location in the ring-shaped members Mr.

Therefore, in the present embodiment, occurrence of uneven heating distribution due to contact with different member is curbed in the ring-shaped members Mr. For example, problems such as a partial drop in temperature of a particular location in the ring-shaped members Mr due to contact with different member, and partial change in characteristics of a particular location in the ring-shaped members Mr (for example, degradation in hardness, or the like) are prevented. Namely, in the present embodiment, the ring-shaped members Mr can be more evenly heated.

In a modification example of the present embodiment, the restraining member 10a can be omitted. Alternatively, in place of the restraining member 10a, it is also possible to employ a constitution including, as a guide member, a spiral member having a spiral shape, a tube member (made of a quartz glass, a ceramic, a non-magnetic SUS, or the like) having a cylindrical shape, or the like surrounding parts around the guide rail 12 and a plurality of ring-shaped members Mr.

In the present embodiment, since a plurality of ring-shaped members Mr move due to operation of gravity, an electrical drive mechanism or motive power for moving a plurality of ring-shaped members Mr is not necessary. Therefore, the structure of the induction heating apparatus can be simplified, and operating costs can be restrained.

In the present embodiment, according to an example, as shown in FIG. 8, with a predetermined interval between the ring-shaped members Mr adjacent to each other, each of the ring-shaped members Mr moves along the guide groove 13. According to another example, as shown in FIG. 9, without substantially having an interval between the ring-shaped members Mr adjacent to each other, that is, in a state in which circumferential surfaces of the ring-shaped members Mr adj acent to each other come into contact with or are close to each other, each of the ring-shaped members Mr moves along the guide groove 13. Other constitutions and operational effects related to the present embodiment are similar to those of the first embodiment and/or other embodiments.

### [Sixth embodiment]

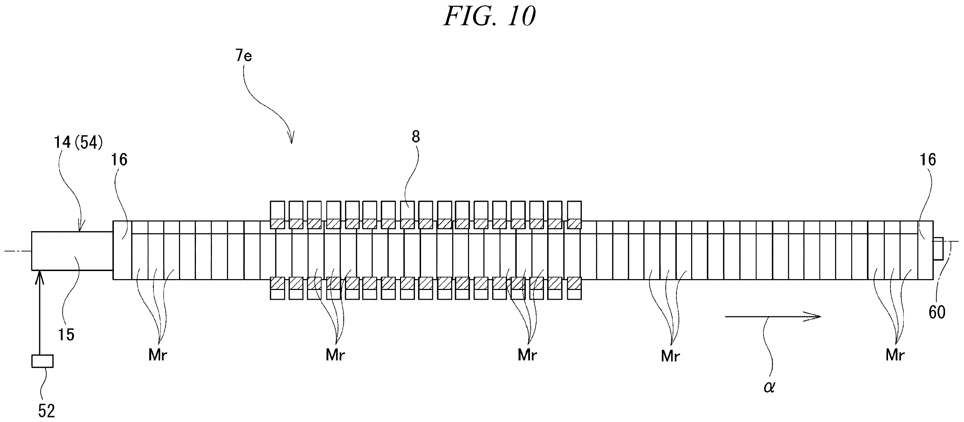

A sixth embodiment of the present disclosure will be described using FIG. 10.

According to an example, the direction in which a plurality of ring-shaped members Mr pass through the heating section is the horizontal direction along the reference axis 60 (the direction of the arrow α in FIG. 10). For this reason, the coil 8 having a cylindrical shape are held in a posture in which the axial directions thereof are aligned in the horizontal direction (the direction of the arrow α). According to another example, as will be described below, the movement direction (conveyance direction) of the ring-shaped members Mr in the heating section can be a direction which is inclined with respect to the horizontal direction, or the vertical direction.

In the present embodiment, the contact control portion 54 includes a cartridge 14. In an induction heating apparatus 7e, the contact control portion 54 includes, as a guide member, the cartridge 14 holding and fixing a plurality of ring-shaped members Mr which are coaxially arranged.

According to an example, the cartridge 14 is constituted of an insulating material such as a ceramic. The cartridge 14 includes a shaft portion 15, and a pair of holding rings 16 which are each detachably attached to both side portions of the shaft portion 15 in the axial direction have a larger diameter than the shaft portion 15. One of the pair of holding rings 16 may be fixed to the shaft portion 15. In the cartridge 14, a plurality of ring-shaped members Mr are each externally fitted to the shaft portion 15. A plurality of ring-shaped members Mr which are coaxially arranged through the shaft portion 15 are sandwiched between the pair of holding rings 16 from both sides in the axial direction so that the plurality of ring-shaped members Mr are held and fixed to the cartridge 14.

In the present embodiment, in the induction heating apparatus 7e, the cartridge 14 is conveyed by the conveyance mechanism 52. When at least a plurality of ring-shaped members Mr pass through the heating section, the conveyance mechanism 52 conveys the cartridge 14 holding the plurality of ring-shaped members Mr in the axial direction of the ring-shaped members Mr (the direction along the reference axis 60). The conveyance mechanism 52 can control the feeding speed of the cartridge 14. According to an example, the conveyance mechanism 52 also plays a role as a supply means (supply portion) supplying a plurality of ring-shaped members Mr to the heating section of the coil 8 in an electrified state.

During induction heating by the induction heating apparatus 7e, a plurality of ring-shaped members Mr which coaxially overlap each other are held and fixed to the cartridge 14 in advance. Further, the cartridge 14 is installed in the conveyance mechanism 52. The conveyance mechanism 52 may have a constitution for supporting end portions of the cartridge 14 on both sides in the axial direction or may have a constitution for supporting only one of the end portions of the cartridge 14 in the axial direction. The conveyance mechanism 52 moves the cartridge 14 in the axial direction of a plurality of ring-shaped members Mr which are held and fixed to the cartridge 14. Accordingly, as shown in FIG. 10, a plurality of ring-shaped members Mr which are held and fixed to the cartridge 14 are supplied in the axial direction to the radially inward region of the coil 8 (heating section) and pass through the heating section in the axial direction. During this passing process, an eddy current is generated in each of the ring-shaped members Mr, and the ring-shaped members Mr are heated so as to reach a target temperature.

According to an example, in the heating section, the cartridge 14 can move while rotating around the axis. In addition, a plurality of cartridges 14 may continuously pass through or may intermittently pass through the heating space.

In the present embodiment, a plurality of ring-shaped members Mr move in the heating space together with the cartridge 14. A plurality of ring-shaped members Mr are held by the cartridge 14 so that movement thereof is restricted. For this reason, a plurality of ring-shaped members Mr are prevented from coming into contact with the coil 8. For this reason, in the plurality of ring-shaped members Mr, occurrence of uneven heating distribution due to contact with the coil 8 is avoided.

In the present embodiment, a plurality of ring-shaped members Mr to be induction-heated move in the axial direction in a state of being held and fixed to the cartridge 14. For this reason, unlike the example in the related art disclosed in Japanese Unexamined Patent Application, First Publication No. 2015-67880, even if the number of ring-shaped members Mr to be held and fixed to one cartridge 14 is increased, a situation in which the posture of the ring-shaped members Mr becomes unstable when induction heating is performed, that is, a situation in which the ring-shaped members Mr come into contact with the cois 8 and heating cannot be evenly performed is prevented. Namely, in the present embodiment, even if the number of ring-shaped members Mr to be held and fixed to one cartridge 14 is increased, heating can be evenly performed. This is advantageous in securing heating treatment capability of the ring-shaped members Mr.

In the present embodiment, members disposed between the inner circumferential surface of the coil 8 and the outer circumferential surfaces of a plurality of ring-shaped members Mr are omitted and/or minimized. For this reason, compared to the first embodiment, the distance between the inner circumferential surfaces of the coil 8 and the outer circumferential surfaces of a plurality of ring-shaped members Mr can be reduced. This is advantageous in securing heating efficiency.

In the present embodiment, induction heating of a plurality of ring-shaped members Mr is executed at the same time, which is advantageous in shortening the processing time per ring-shaped member Mr. Other constitutions and operational effects related to the present embodiment are similar to those of the first embodiment and/or other embodiments.

Alternatively, in the present embodiment, the movement direction (conveyance direction) of the cartridge 14 (ring-shaped members Mr) in the heating section can be a direction which is inclined with respect to the horizontal direction, or the vertical direction. In addition, in a modification example of the present embodiment, it is also possible to employ a constitution including, as a guide member, a spiral member having a spiral shape, a tube member (made of a quartz glass, a ceramic, a non-magnetic SUS, or the like) having a cylindrical shape, or the like disposed at the radially inward side of the coil. For example, when induction heating is performed, a plurality of ring-shaped members Mr which are held and fixed to the cartridge can be moved in the axial direction through the space of the spiral member, the glass tube, or the like at the radially inward side.

### [Seventh embodiment]

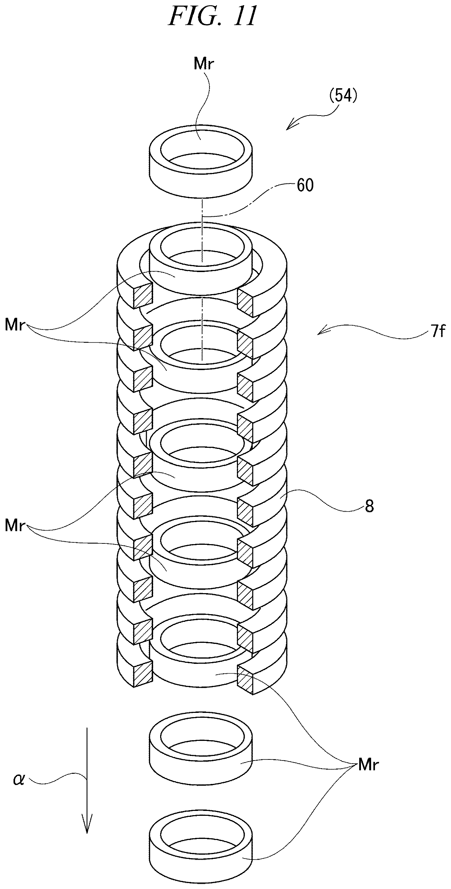

A seventh embodiment of the present disclosure will be described using FIG. 11.

In the present embodiment, the direction in which a plurality of ring-shaped members Mr pass through the heating section is a direction directed downward from above in the vertical direction along the reference axis 60 (the direction of the arrow α in FIG. 11). For this reason, the coil 8 having a cylindrical shape are held in a posture in which the axial directions thereof are aligned in the vertical direction (the direction of the arrow α). The inner diameter of the coil 8 is larger than the outer diameters of the ring-shaped members Mr (workpieces).

In the present embodiment, the supply portion supplies a plurality of ring-shaped members Mr to the radially inward region of the coil 8 from a position above the coil 8 (entrance of the heating section).

In the present embodiment, the contact control portion 54 can include gravity acting on a plurality of ring-shaped members Mr. In addition, the contact control portion 54 can include a mechanism for positionally setting positions of the ring-shaped members Mr (positions or the like in the radial direction with respect to the heating space) at the entrance of the heating section.

In the present embodiment, in an induction heating apparatus 7f, due to gravity, a plurality of ring-shaped members Mr move in the vertical direction. During induction heating of a plurality of ring-shaped members Mr, the plurality of ring-shaped members Mr are supplied to the entrance of the heating section by the supply portion. A plurality of ring-shaped members Mr which are disposed coaxially with the coil 8 freely fall sequentially from above the heating section of the coil 8. Due to operations of gravity, a plurality of ring-shaped members Mr move downward from above in the heating section and pass through the heating space of the coil 8. In the heating space, an eddy current is generated in each of the ring-shaped members Mr, and the ring-shaped members Mr are heated so as to reach a target temperature. According to an example, the amount of electrification with respect to the coil 8, the axial length of the coil 8, and the like are suitably set in accordance with the sizes of the ring-shaped members Mr such that each of the ring-shaped members Mr is heated to a target temperature.

In the present embodiment, a plurality of ring-shaped members Mr pass through the heating section while freely falling due to gravity, and contact of a plurality of ring-shaped members Mr with the coil 8 is avoided. For this reason, in the ring-shaped members Mr, occurrence of uneven heating distribution due to contact with the coil 8 is avoided.

In the present embodiment, the ring-shaped members Mr can be evenly heated without using a mechanism for rotating the ring-shaped members Mr on their axes. For this reason, the structure of the induction heating apparatus can be simplified.

In the present embodiment, members disposed between the inner circumferential surface of the coil 8 and the outer circumferential surfaces of a plurality of ring-shaped members Mr are omitted and/or minimized. For this reason, the distance between the inner circumferential surface of the coil 8 and the outer circumferential surfaces of a plurality of ring-shaped members Mr can be reduced. This is advantageous in securing induction heating efficiency.

In the present example, since a plurality of ring-shaped members Mr can be moved by means of operation of gravity, a drive mechanism or motive power for moving a plurality of ring-shaped members Mr is not necessary. Therefore, the structure of the induction heating apparatus can be simplified, and operating costs can be restrained. Other constitutions and operational effects related to the present embodiment are similar to those of the first embodiment and/or other embodiments.

### [Eighth embodiment]

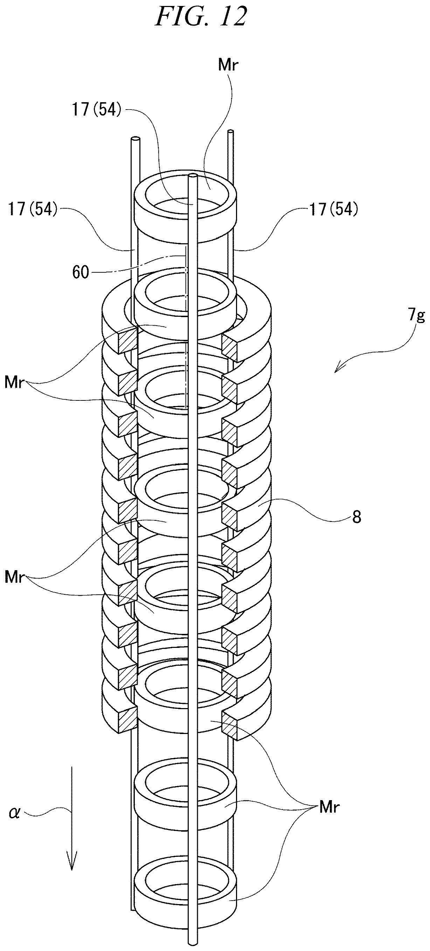

An eighth embodiment of the present disclosure will be described using FIG. 12.

In the present embodiment, in an induction heating apparatus 7g, guide rods 17 are added to the constitution of the seventh embodiment. The contact control portion 54 includes a plurality of (three in the present example) guide rods 17 serving as guide members. According to an example, the plurality of guide rods 17 are each constituted of an insulating material such as a ceramic. The plurality of guide rods 17 each extend in the vertical direction and are disposed apart from each other in the circumferential direction on a virtual cylinder extending in the vertical direction. The plurality of guide rods 17 are vertically inserted through the radially inward region of the coil 8.

The plurality of guide rods 17 are used for guiding movement of the ring-shaped members Mr in the axial direction on the inward side of the plurality of guide rods 17 when a plurality of ring-shaped members Mr pass through the heating section of the coil 8. That is, the plurality of guide rods 17 are members for performing center alignment of the ring-shaped members Mr which freely fall and preventing contact between the ring-shaped members Mr and the coil 8. The diameters of inscribed circles of the plurality of guide rods 17 are slightly larger than the outer diameters of the ring-shaped members Mr.

In the present embodiment, when the ring-shaped members Mr freely fall, they are allowed to move in a direction intersecting the vertical direction or in the circumferential direction on the inward side of the plurality of guide rods 17. The outer circumferential surfaces of the ring-shaped members Mr are prevented from continuously coming into contact with the same location with respect to each of the plurality of guide rods 17. For this reason, it becomes easy to evenly heat a plurality of ring-shaped members Mr.

In the present embodiment, the radial thicknesses of the plurality of guide rods 17 disposed between the inner circumferential surface of the coil 8 and the outer circumferential surfaces of a plurality of ring-shaped members Mr can be set to be small. Compared to the first embodiment, the distance between the inner circumferential surface of the coil 8 and the outer circumferential surfaces of a plurality of ring-shaped members Mr is shortened. This is advantageous in securing induction heating efficiency. Other constitutions and operational effects related to the present embodiment are similar to those of the seventh embodiment and/or other embodiments.

In a modification example of the present embodiment, in place of a plurality of guide rods, it is also possible to employ a constitution including, as a guide member, a spiral member having a spiral shape, a tube member (made of a quartz glass, a ceramic, a non-magnetic SUS, or the like) having a cylindrical shape, or the like.

### [Ninth embodiment]

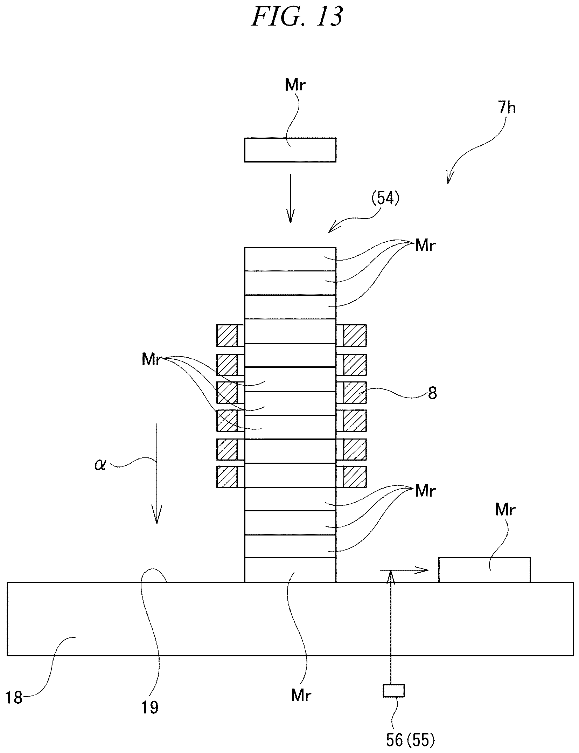

A ninth embodiment of the present disclosure will be described using FIG. 13.

In the present embodiment, the direction in which a plurality of ring-shaped members Mr pass through the heating section is a direction directed downward from above in the vertical direction along the reference axis (the direction of the arrow a in FIG. 13). For this reason, the coil 8 having a cylindrical shape are held in a posture in which the axial directions thereof are aligned in the vertical direction (the direction of the arrow α). The inner diameter of the coil 8 is larger than the outer diameters of the ring-shaped members Mr (workpieces).

In the present embodiment, an induction heating apparatus 7h includes a support stand 18. According to an example, the support stand 18 has an upper surface 19 which is constituted of a horizontal surface. A lower end portion of the coil 8 is disposed at a position apart upward from the upper surface 19 of the support stand 18.

In the present embodiment, the contact prevention means can include gravity acting on a plurality of ring-shaped members Mr. In addition, the contact control portion can include a mechanism for positionally setting positions of the ring-shaped members Mr (positions or the like in the radial direction with respect to the heating space) at the entrance of the heating section.

In the present embodiment, the induction heating apparatus 7h can include a second conveyance mechanism 55 for conveying the ring-shaped members Mr on the support stand 18. According to an example, the second conveyance mechanism 55 can include a drawing-out mechanism 56 for drawing out one ring-shaped member Mr from the ring-shaped members Mr disposed on the support stand 18. According to an example, the drawing-out mechanism 56 can have a striking member which collides with a side surface of one ring-shaped member Mr. According to another example, the drawing-out mechanism 56 can have other constitutions.

In the present embodiment, during induction heating of a plurality of ring-shaped members Mr, as shown in FIG. 13, a plurality of ring-shaped members Mr are coaxially stacked on the upper surface 19 of the support stand 18 in the vertical direction. In a plurality of ring-shaped members Mr, some ring-shaped members Mr positioned in an intermediate portion in the vertical direction are disposed in the radially inward region of the coil 8 (heating section).

Next, in a plurality of ring-shaped members Mr stacked on the upper surface 19 of the support stand 18, one ring-shaped member Mr positioned in the lower end portion is drawn out and moved in the horizontal direction by the drawing-out mechanism 56. In a plurality of ring-shaped members Mr on the support stand 18, one at the lower end is drawn out so that the remaining ring-shaped members Mr move downward. In this manner, the ring-shaped members Mr are discharged so as to be sequentially drawn out in the horizontal direction on the support stand 18 so that the stacked ring-shaped members Mr sequentially move downward due to gravity. In addition, every time the ring-shaped member Mr is drawn out on the support stand 18, a new ring-shaped member Mr is stacked on the stacked ring-shaped members Mr. Accordingly, the ring-shaped members Mr are sequentially supplied to the heating section, and the ring-shaped members Mr are sequentially discharged from the heating section. A plurality of ring-shaped members Mr move downward from above in the heating section and pass through the heating space of the coil 8. In the heating space, an eddy current is generated in the ring-shaped members Mr, and the ring-shaped members Mr are heated so as to reach a target temperature.

In the present embodiment, a plurality of ring-shaped members Mr stacked on the upper surface 19 of the support stand 18 are sequentially moved downward utilizing operation of gravity. For this reason, in the ring-shaped members Mr, occurrence of uneven heating distribution due to contact with the coil 8 is avoided.

In the present embodiment, members disposed between the inner circumferential surface of the coil 8 and the outer circumferential surfaces of a plurality of ring-shaped members Mr are omitted and/or minimized. For this reason, the distance between the inner circumferential surface of the coil 8 and the outer circumferential surfaces of a plurality of ring-shaped members Mr can be reduced. This is advantageous in securing induction heating efficiency. Other constitutions and operational effects related to the present embodiment are similar to those of the first embodiment and/or other embodiments.

### [Tenth embodiment]

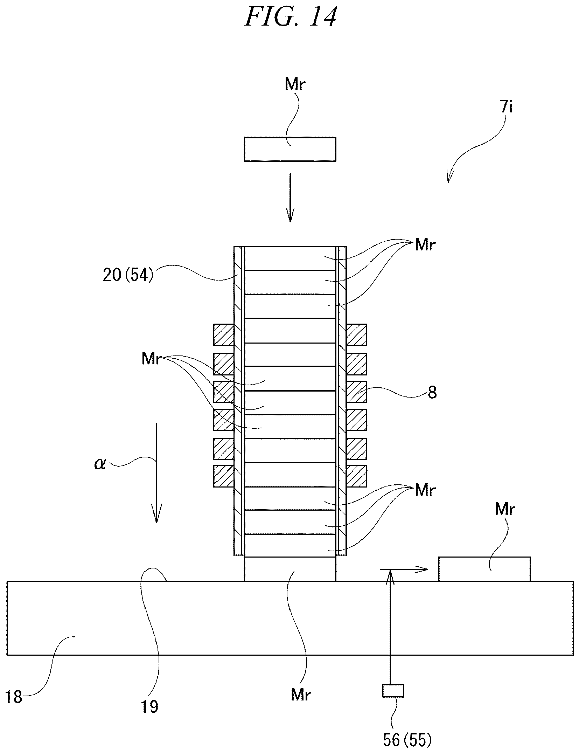

A tenth embodiment of the present disclosure will be described using FIG. 14.

In the present embodiment, in an induction heating apparatus 7i, a glass tube 20 is added to the constitution of the ninth embodiment. The contact control portion 54 includes the glass tube 20 serving as a guide member. According to an example, the glass tube 20 is made of a quartz glass which is an insulating material having an excellent heat resistance and has a cylindrical shape. The glass tube 20 is vertically inserted through the radially inward region of the coil 8. In place of a glass tube made of a quartz glass, a tube member constituted of a ceramic, a non-magnetic SUS, or the like can also be used.

The glass tube 20 is used for guiding movement of a plurality of ring-shaped members Mr in the axial direction at the radially inward side of the glass tube 20 when a plurality of ring-shaped members Mr pass through the heating section of the coil 8. That is, the glass tube 20 is a member for performing center alignment of a plurality of ring-shaped members Mr which are stacked in the vertical direction and preventing contact between the ring-shaped members Mr and the coil 8. The inner diameter of the glass tube 20 is slightly larger than the outer diameters of the ring-shaped members Mr. A lower end surface of the glass tube 20 is disposed at a position apart upward from the upper surface 19 of the support stand 18. The interval between the lower end surface of the glass tube 20 and the upper surface 19 of the support stand 18 is set to be slightly larger than width dimensions of the ring-shaped members Mr in the axial direction.

In the present embodiment, the glass tube 20 serving as a guide member is disposed between a plurality of ring-shaped members Mr and the coil 8. In the heating space, slight movement in a direction intersecting the vertical direction or in the circumferential direction on the inward side of the glass tube 20 is allowed. The outer circumferential surfaces of the ring-shaped members Mr are prevented from continuously coming into contact with the same location with respect to the inner circumferential surface of the glass tube 20. For this reason, it becomes easy to evenly heat a plurality of ring-shaped members Mr.

In the present embodiment, the radial thickness of the glass tube 20 disposed between the inner circumferential surface of the coil 8 and the outer circumferential surfaces of a plurality of ring-shaped members Mr can be set to be small. Compared to the first embodiment, the distance between the inner circumferential surface of the coil 8 and the outer circumferential surfaces of a plurality of ring-shaped members Mr is reduced. This is advantageous in securing induction heating efficiency. Other constitutions and operational effects related to the present embodiment are similar to those of the ninth embodiment and/or other embodiments.

In a modification example of the present embodiment, in place of a glass tube, it is also possible to employ a constitution including, as a guide member, a spiral member having a spiral shape, a plurality of guide rods disposed apart from each other in the circumferential direction, or the like.

### [Eleventh embodiment]

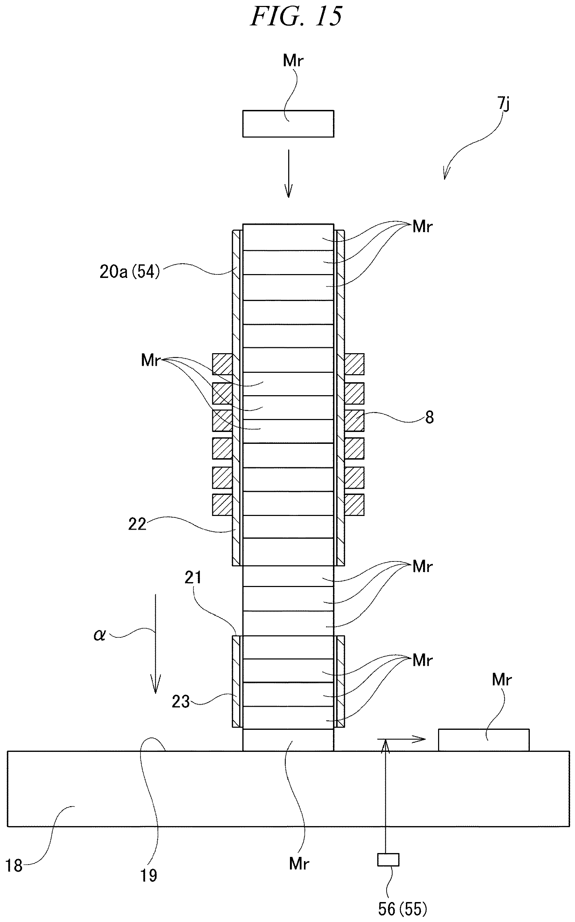

An eleventh embodiment of the present disclosure will be described using FIG. 15.

In the present embodiment, similar to the tenth embodiment, a glass tube 20a serving as a guide member is disposed between a plurality of ring-shaped members Mr and the coil 8. In the present embodiment, in an induction heating apparatus 7j, the glass tube 20a is provided with an opening portion (discontinuous portion) 21. The glass tube 20a has the opening portion (discontinuous portion) 21 in a part positioned below the coil 8 over a part or the whole circumference in the circumferential direction. According to an example, the glass tube 20a is divided into upper and lower halves with a discontinuous portion 21 sandwiched therebetween. In this case, it is constituted of an upstream side part 22 positioned on the upstream side of the heat treatment step (the upward side in FIG. 15) from the discontinuous portion 21, and a downstream side part 23 positioned on the downstream side of the heat treatment step (the downward side in FIG. 15) from the discontinuous portion 21.

In a plurality of ring-shaped members Mr which are coaxially stacked in the vertical direction on the support stand 18, the ring-shaped members Mr present at positions corresponding to the opening portion (discontinuous portion) 21 are exposed to the outside of the glass tube 20a. In the present embodiment, a coolant is applied to the ring-shaped members Mr exposed in this manner. Accordingly, the ring-shaped members Mr are cooled. Other constitutions and operational effects related to the present embodiment are similar to those of the seventh embodiment and/or other embodiments.

In the embodiments other than the present embodiment, when the induction heating apparatus (contact control unit) is provided with a constitution including a tubular member such as a glass tube serving as a guide member, it is possible to employ a form in which an opening portion (discontinuous portion) is provided in the tubular member in the same manner as that of the eleventh embodiment.

### [Twelfth embodiment]

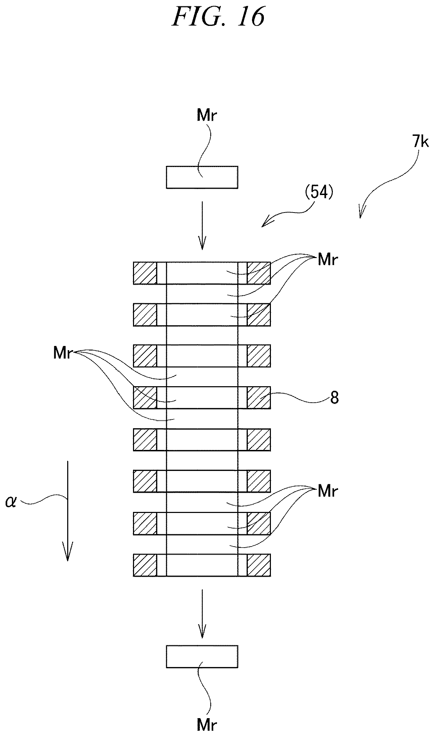

A twelfth embodiment of the present disclosure will be described using FIG. 16.

In the present embodiment, the direction in which a plurality of ring-shaped members Mr pass through the heating section of the coil 8 is a direction directed downward from above in the vertical direction along the reference axis (the direction of the arrow α in FIG. 16). For this reason, the coil 8 having a cylindrical shape are held in a posture in which the axial directions thereof are aligned in the vertical direction (the direction of the arrow α). The inner diameter of the coil 8 is larger than the outer diameters of the ring-shaped members Mr (workpieces).

In the present embodiment, the supply portion supplies a plurality of ring-shaped members Mr to the radially inward region (the heating section of the coil 8) from above.

In the present embodiment, the contact control portion 54 includes an electromagnetic force which is generated by the coil 8 in an electrified state and magnetically levitates a plurality of ring-shaped members Mr. Whether or not the ring-shaped members Mr are magnetically levitated is determined by the balance between an upward component of an electromagnetic force acting on the ring-shaped members Mr and gravity. In the present embodiment, the size of the coil 8, the amount of electrification, and the like are suitably set in accordance with the sizes of the ring-shaped members Mr such that each of the ring-shaped members Mr can be magnetically levitated. Alternatively and/or additionally, using the coil 8 having an inner diameter increasing upward, the upward component of an electromagnetic force acting on the ring-shaped members Mr can be likely to be obtained.

In the present embodiment, in an induction heating apparatus 7k, the supply portion causes each of a plurality of ring-shaped members Mr which are disposed coaxially with the induction heating coil 8 to freely fall sequentially from above the facing region of the induction heating coil 8. A plurality of ring-shaped members Mr are sequentially supplied to the heating section from above. The ring-shaped members Mr are induction-heated in a state of being magnetically levitated due to an electromagnetic force of the induction heating coil 8 in the heating section. The ring-shaped members Mr are sent out downward from the heating section after being heated to a target temperature.

According to an example, a ring-shaped member (previous member) Mr which is magnetically levitated in the heating section is sent out downward from the heating section due to a falling force of a ring-shaped member (next member) Mr supplied subsequently. For example, the number of ring-shaped members Mr (next members) to be supplied to the heating section from above and the number of ring-shaped members (previous members) Mr to be sent out downward from the heating section are one each. According to another example, the numbers of previous members and next members can each be two or more. The foregoing numerical values are merely examples, and the embodiments are not limited to the foregoing numerical values.

In the present embodiment, a plurality of ring-shaped members Mr are induction-heated in a state of being magnetically levitated in the heating section. Due to operation of a magnetic force, a plurality of ring-shaped members Mr are prevented from coming into contact with the coil 8. For this reason, in the ring-shaped members Mr, occurrence of uneven heating distribution due to contact with the coil 8 is avoided.

In the present embodiment, since the ring-shaped members Mr can be evenly heated without using a mechanism for rotating the ring-shaped members Mr, the structure of the induction heating apparatus can be simplified.

In the present embodiment, members disposed between the inner circumferential surface of the coil 8 and the outer circumferential surfaces of a plurality of ring-shaped members Mr are omitted and/or minimized. For this reason, the distance between the inner circumferential surface of the coil 8 and the outer circumferential surfaces of a plurality of ring-shaped members Mr can be reduced. This is advantageous in securing induction heating efficiency. Other constitutions and operational effects related to the present embodiment are similar to those of the seventh embodiment and/or other embodiments.

### [Thirteenth embodiment]

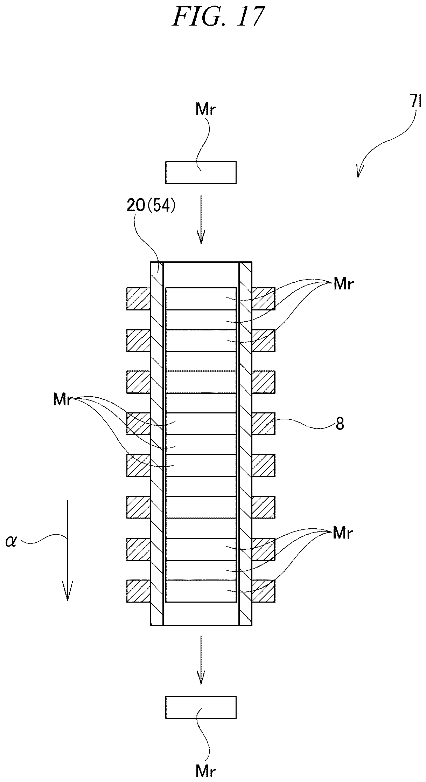

A thirteenth embodiment of the present disclosure will be described using FIG. 17.

In the present embodiment, in an induction heating apparatus 7l, the glass tube 20 is added to the constitution of the twelfth embodiment. The contact control portion 54 includes the glass tube 20 serving as a guide member. According to an example, the glass tube 20 is vertically inserted through the radially inward region of the coil 8. Regarding the glass tube 20, in addition to a glass tube made of a quartz glass, a tube member constituted of a ceramic, a non-magnetic SUS, or the like can also be used.

The glass tube 20 is used for guiding movement of a plurality of ring-shaped members Mr in the axial direction at the radially inward side of the glass tube 20 when a plurality of ring-shaped members Mr pass through the heating section of the coil 8. That is, the glass tube 20 is a member for performing center alignment of a plurality of ring-shaped members Mr which are stacked in the vertical direction and preventing contact between the ring-shaped members Mr and the coil 8. The inner diameter of the glass tube 20 is set to be slightly larger than the outer diameters of the ring-shaped members Mr.

In the present embodiment, the glass tube 20 serving as a guide member is disposed between a plurality of ring-shaped members Mr and the coil 8. In the heating space, slight movement in a direction intersecting the vertical direction or in the circumferential direction on the inward side of the glass tube 20 is allowed. The outer circumferential surfaces of the ring-shaped members Mr are prevented from continuously coming into contact with the same location with respect to the inner circumferential surface of the glass tube 20. For this reason, it becomes easy to evenly heat a plurality of ring-shaped members Mr.

In the present embodiment, the radial thickness of the glass tube 20 disposed between the inner circumferential surface of the coil 8 and the outer circumferential surfaces of a plurality of ring-shaped members Mr can be set to be small. Compared to the first embodiment, the distance between the inner circumferential surface of the coil 8 and the outer circumferential surfaces of a plurality of ring-shaped members Mr is reduced. This is advantageous in securing induction heating efficiency. Other constitutions and operational effects related to the present embodiment are similar to those of the twelfth embodiment.

In a modification example of the present embodiment, in place of a glass tube, it is also possible to employ a constitution including, as a guide member, a spiral member having a spiral shape, a plurality of guide rods, or the like.

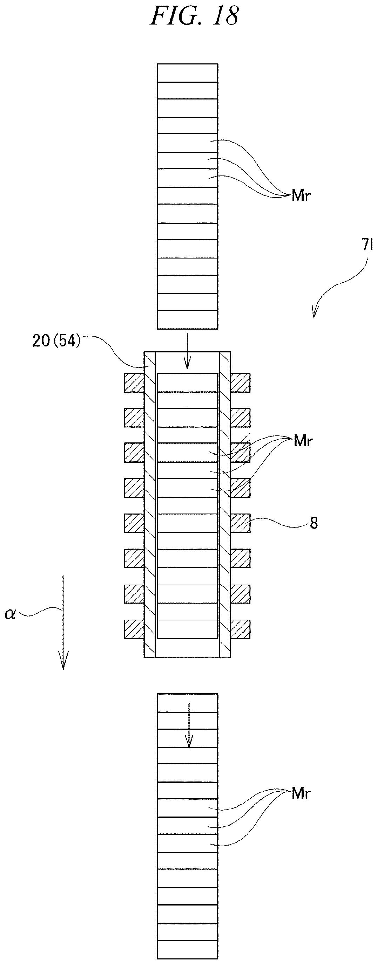

In the twelfth embodiment and the thirteenth embodiment, the number of ring-shaped members Mr to be fed to the heating section of the coil 8 from above and the number of ring-shaped members Mr to be sent out downward from the heating section one each. In a modification example of the thirteenth embodiment, as shown in FIG. 18, the number of ring-shaped members Mr to be fed to the heating section from above and the number of ring-shaped members Mr to be sent out downward from the heating section can each be a multiple number. In an embodiment using a magnetic levitation force, the ring-shaped members Mr can also be sent out downward from the heating section by controlling electrification to the coil 8 (for example, canceling electrification, that is, canceling an electromagnetic force acting on the ring-shaped members Mr).

In the twelfth embodiment and the thirteenth embodiment, the ring-shaped members Mr are fed to the heating section from above, magnetically levitated in the heating section, and then sent out downward from the heating section. On the contrary to this, in a modification example, the ring-shaped members Mr can be fed to the heating section from below, magnetically levitated in the heating section, and then sent out upward from the heating section.

### [Fourteenth embodiment]

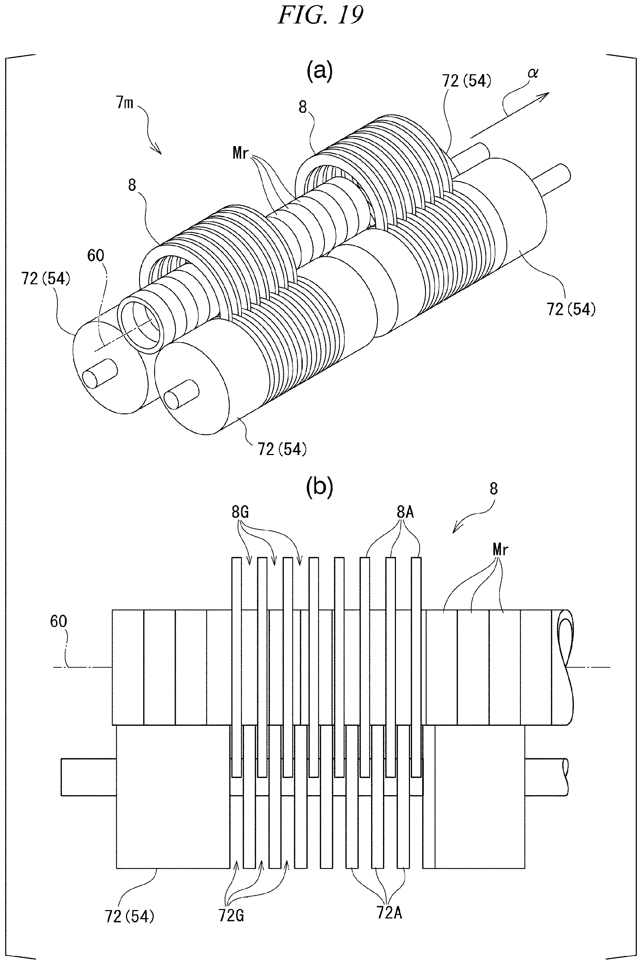

A fourteenth embodiment of the present disclosure will be described using FIG. 19.

In the present embodiment, similar to the first embodiment, the contact control portion 54 includes a plurality of rollers 72 serving as guide members. In the plurality of rollers 72, unlike the first embodiment, the axial center of each of the rollers 72 is disposed at the radially outer side of the coils 8.

Each of the rollers 72 extends in the direction along the reference axis 60. According to an example, the rollers 72 can rotate in the same rotation direction around respective axes. According to another example, the rollers 72 can rotate in the rotation direction different from each other around respective axes. According to an example, the rollers 72 are each constituted of an insulating material such as a ceramic. According to another example, the rollers 72 are each constituted of a material different from an insulating material. According to an example, the movement direction of the ring-shaped members Mr (the direction along the reference axis 60, the conveyance direction) in the heating section is set to the horizontal direction. According to another example, the movement direction of the ring-shaped members Mr (the direction along the reference axis 60, the conveyance direction) in the heating section can be set to a direction which is inclined with respect to the horizontal direction, or the vertical direction.

In the present embodiment, in an induction heating apparatus 7m, the contact control portion 54 is constituted such that the ring-shaped members Mr on the inward side in the heating section are supported through gaps between the coils 8 using parts of the rollers 72. In the present embodiment, parts of the rollers 72 are inserted into the gaps between the coils 8. The coils 8 have a plurality of gaps 8G which are provided between a plurality of annular elements 8A. Two adjacent annular elements 8A are electrically connected to each other in parts of the coils 8 in the circumferential direction. The rollers 72 have a plurality of grooves 72G which are provided between a plurality of annular elements 72A. The widths of the gaps 8G of the coils 8 are set to be larger than the width of one annular element 72A of the rollers 72. The widths of the grooves 72G of the rollers 72 are set to be larger than the width of one annular element 8A of the coils 8. The plurality of annular elements 72A of the rollers 72 are respectively inserted into the plurality of gaps 8G of the coils 8, and the outer circumferential surfaces of the plurality of annular elements 72A are disposed on the inward side of the heating section. As necessary, in order to avoid electrical connection between the coils 8 and the rollers 72, non-conductive coating films can be provided on surfaces of the rollers 72 and/or the coils 8. The ring-shaped members Mr in the heating section are supported by the outer circumferential surfaces of the rollers 72 (the outer circumferential surface of the annular elements 72A) disposed on the inward side of the heating section.

According to an example, a propulsive force of the ring-shaped members Mr in the heating section can be generated by a feeding device (supply portion, not shown) or the like disposed on the upstream side of the heat treatment step. According to another example, at least a part of a propulsive force of the ring-shaped members Mr in the heating section can be generated using the rollers 72. According to another example, gravity can be used as at least a part of a propulsive force of the ring-shaped members Mr in the heating section.

In the present embodiment, in the heating section, the ring-shaped members Mr are supported by the rollers 72. The ring-shaped members Mr move in the axial direction along the reference axis 60 based on the propulsive force described above. In addition, the ring-shaped members Mr rotate around the reference axis 60 in response to rotation of the rollers 72. For this reason, a situation in which the rollers 72 continuously come into contact with the same location in the ring-shaped members Mr (the same location in the circumferential direction) is avoided. In the ring-shaped members Mr, the ring-shaped members Mr move in the axial direction while contact points with respect to the rollers 72 continuously change. In the heating section, circumferential positions where the ring-shaped members Mr come into contact with the rollers 72 change. Therefore, heat transfer from the ring-shaped members Mr to the rollers 72 is prevented from being concentrated in a particular location in the ring-shaped members Mr, and occurrence of uneven heating distribution is curbed.

In the present embodiment, in the heating section, although the ring-shaped members Mr are supported by the rollers 72, the central axes of the rollers 72 are disposed at the radially outer side of the coils 8. For this reason, members disposed between the inner circumferential surfaces of the coils 8 and the outer circumferential surfaces of a plurality of ring-shaped members Mr are omitted and/or minimized, and compared to the first embodiment, the distance between the inner circumferential surfaces of the coils 8 and the outer circumferential surfaces of a plurality of ring-shaped members Mr can be set to be small. This is advantageous in securing induction heating efficiency of a plurality of ring-shaped members Mr.

In the present embodiment, the widths of the grooves 72G of the rollers 72 (intervals between two adjacent annular elements 72A) are set to be smaller than the widths of the ring-shaped members Mr (shaft length). Accordingly, in the heating section, the ring-shaped members Mr are prevented from falling into the grooves of the rollers 72. Other constitutions and operational effects related to the present embodiment are similar to those of the first embodiment and/or other embodiments.

### [Fifteenth embodiment]

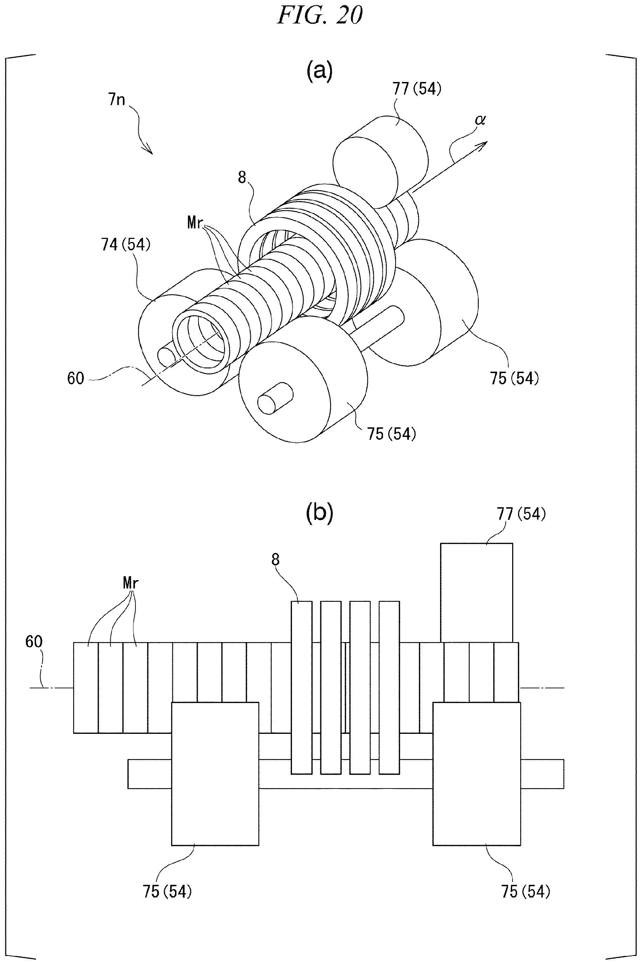

A fifteenth embodiment of the present disclosure will be described using FIG. 20.

In the present embodiment, similar to the first embodiment, the contact control portion 54 includes a plurality of rollers 72 serving as guide members. In the plurality of rollers 72, unlike the first embodiment, the axial center of each of the rollers 72 is disposed at the radially outer side of the coil 8. In addition, the contact control portion 54 includes a braking portion 77 serving as a guide member.

Each of the rollers 75 extends in the direction along the reference axis 60. According to an example, the rollers 75 can rotate in the same rotation direction around respective axes. According to another example, the rollers 75 can rotate in the rotation direction different from each other around respective axes. According to an example, the rollers 75 are each constituted of an insulating material such as a ceramic. According to another example, the rollers 75 are each constituted of a material different from an insulating material. According to an example, the movement direction of the ring-shaped members Mr (the direction along the reference axis 60, the conveyance direction) in the heating section is set to the horizontal direction. According to another example, the movement direction of the ring-shaped members Mr (the direction along the reference axis 60, the conveyance direction) in the heating section can be set to a direction which is inclined with respect to the horizontal direction, or the vertical direction.

In an induction heating apparatus 7n, the braking portion 77 is constituted such that a braking force in the axial direction is applied to the ring-shaped members Mr. According to an example, the braking portion 77 is disposed so as to come into contact with the outer circumferential surfaces of the ring-shaped members Mr. According to another example, the braking portion 77 is disposed so as to come into contact shaft end surfaces of the ring-shaped members Mr.

According to an example, a propulsive force of the ring-shaped members Mr in the heating section can be generated by a feeding device (supply portion, not shown) or the like disposed on the upstream side of the heat treatment step. According to another example, gravity can be used as at least a part of a propulsive force of the ring-shaped members Mr in the heating section.

In the present embodiment, outside the heating section (the entrance and the exit of the heating section, a section between two heating sections, and the like), the ring-shaped members Mr are supported by the outer circumferential surfaces of the rollers 72.

In the present embodiment, the direction of a propulsive force of the ring-shaped members Mr and the direction of a braking force by the braking portion 77 are reversely set. Accordingly, a relatively large force in the axial direction acts on a plurality of ring-shaped members Mr. In a plurality of ring-shaped members Mr, one ring-shaped member Mr is held by being sandwiched between two ring-shaped members Mr on both sides. When the conveyance direction extends laterally (the horizontal direction or the inclination direction), the ring-shaped members Mr are prevented from falling in the radial direction due to a force acting in the axial direction in the heating section. When the conveyance direction extends vertically (the vertical direction or the inclination direction close to the vertical direction), the ring-shaped members Mr are prevented from falling in the axial direction due to a force acting in the axial direction in the heating section.

According to an example, the braking portion 77 is constituted to be able to move a braking position in the axial direction. In addition, as necessary, it is constituted to apply a braking force to a plurality of different locations in a plurality of ring-shaped members Mr. For example, in order to continuously hold a plurality of ring-shaped members Mr, operation of switching a plurality of braking positions in the axial direction is performed with respect to the plurality of ring-shaped members Mr in a coaxially tight contact state every time a predetermined number of a plurality of ring-shaped members Mr pass through the heating section. The ring-shaped members Mr can be sent out to a subsequent step one by one or by a plurality of ring-shaped members Mr by suitably controlling the braking portion 77.

In the present embodiment, in the heating section, the ring-shaped members Mr are supported using a braking force by the braking portion 77. For this reason, in the heating section, a situation in which the ring-shaped members Mr come into contact with the coil 8 or different member is avoided. Therefore, in induction heating using the coil 8, even heating distribution is achieved.

In the present embodiment, members disposed between the inner circumferential surface of the coil 8 and the outer circumferential surfaces of a plurality of ring-shaped members Mr are omitted and/or minimized, and compared to the first embodiment, the distance between the inner circumferential surface of the coil 8 and the outer circumferential surfaces of a plurality of ring-shaped members Mr can be set to be small. This is advantageous in securing induction heating efficiency of a plurality of ring-shaped members Mr. Other constitutions and operational effects related to the present embodiment are similar to those of the first embodiment and/or other embodiments.

### [Sixteenth embodiment]

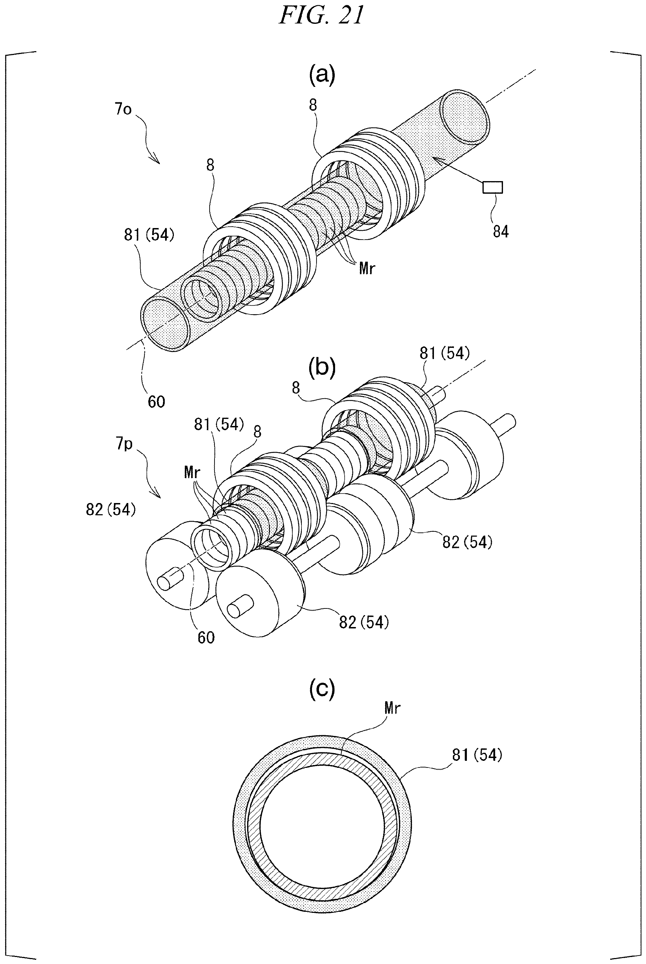

A sixteenth embodiment of the present disclosure will be described using FIG. 21.

In the present embodiment, in an induction heating apparatus 7o, the contact control portion 54 includes, as a guide member, a tube member 81 which can rotate on its axes. The tube member 81 has a cylindrical shape, extends in the conveyance direction along the reference axis 60, and is disposed such that the central axis is substantially aligned with the reference axis. The tube member 81 is disposed between the ring-shaped members Mr and the coils 8 in at least the heating space. In the example shown in the part (a) of FIG. 21, one tube member 81 is disposed for two coils 8. In the example shown in the part (b) of FIG. 21, two tube members 81 are respectively disposed for two coils 8. In addition, in the example shown in the part (b) of FIG. 21, rollers 82 for supporting the ring-shaped members Mr are provided at positions other than the heating space.

The tube member 81 is rotated around the reference axis 60 by a drive portion 84. According to an example, the tube member 81 is constituted using a non-magnetic material such as a quartz glass, a ceramic, or a non-magnetic SUS. According to another example, the tube member 81 can be constituted using other materials. As shown in the part (c) of FIG. 21, the inner diameter of the tube member 81 is set to be larger than the outer diameters of the ring-shaped members Mr.

According to an example, the movement direction of the ring-shaped members Mr (the direction along the reference axis 60, the conveyance direction) in the heating section is set to the horizontal direction. According to another example, the movement direction of the ring-shaped members Mr (the direction along the reference axis 60, the conveyance direction) in the heating section can be set to a direction which is inclined with respect to the horizontal direction, or the vertical direction.

According to an example, a propulsive force of the ring-shaped members Mr in the heating section can be generated by a feeding device (supply portion, not shown) or the like disposed on the upstream side of the heat treatment step. According to another example, at least a part of a propulsive force of the ring-shaped members Mr in the heating section can be generated using the tube member 81. According to another example, gravity can be used as at least a part of a propulsive force of the ring-shaped members Mr in the heating section.

In the present embodiment, in the heating section, the ring-shaped members Mr are supported by the tube member 81. The ring-shaped members Mr move in the axial direction along the reference axis 60 based on the propulsive force described above. In addition, in the ring-shaped members Mr, due to rotation of the tube member 81, a situation in which the tube member 81 continuously comes into contact with the same location in the ring-shaped members Mr (the same location in the circumferential direction) is avoided. In the ring-shaped members Mr, the ring-shaped members Mr move in the axial direction while the contact point with respect to the tube member 81 continuously changes. In the heating section, circumferential positions where the ring-shaped members Mr come into contact with the tube member 81 change. Therefore, heat transfer from the ring-shaped members Mr to the tube member 81 is prevented from being concentrated in a particular location in the ring-shaped members Mr, and occurrence of uneven heating distribution is curbed.

In the present embodiment, compared to the first embodiment, the distance between the inner circumferential surfaces of the coils 8 and the outer circumferential surfaces of a plurality of ring-shaped members Mr can be set to be small. This is advantageous in securing induction heating efficiency of a plurality of ring-shaped members Mr. Other constitutions and operational effects related to the present embodiment are similar to those of the first embodiment and/or other embodiments.

FIG. 22 is a view of a schematic constitution of a motor as an example of a mechanical device. For example, a ring-shaped member can be applied to bearings 900A and 900B and the like for supporting a rotation shaft 963 of a motor 961 shown in FIG. 22.

In FIG. 22, the motor 961 is a brushless motor and has a cylindrical center housing 965 and a substantially disk-shaped front housing 967 blocking an opening end portion of this center housing 965 on one side. On the inward side of the center housing 965, the rotatable rotation shaft 963 is supported via the bearings 900A and 900B disposed in bottom portions of the front housing 967 and the center housing 965 along axial centers thereof. A motor driving rotor 969 is provided around the rotation shaft 963, and a stator 971 is fixed to the inner circumferential surface of the center housing 965.

The motor 961 is generally mounted in a machine or a vehicle and rotatively drives the rotation shaft 963 supported by the bearings 900A and 900B.

Bearing elements or bearings can be applied to rotation support portions of linear motion apparatuses such as machines having a rotation portion, various manufacturing apparatuses, for example, screw apparatuses such as ball screw apparatuses, and actuators (combinations of a linear guide bearing and a ball screw, XY-tables, and the like). In addition, bearing elements or bearings can be applied to steering apparatuses such as wipers, power windows, electric doors, electric seats, steering columns (for example, electric tilt telescopic steering columns), universal joints, intermediate gears, rack-and-pinions, electric power steering devices, and worm reducers. Moreover, bearing elements or bearings can be applied to various vehicles such as automobiles, motorcycles, and railroad cars. A bearing having the present constitution can be favorably applied to any location where relative rotation occurs, which can lead to improvement in product quality and low reduction.

Diverse kinds of bearings such as rolling bearings and sliding bearings can be favorably applied as bearings including a ring-shaped member. For example, bearing elements can be applied to outer rings and inner rings of radial rolling bearings, outer rings and inner rings of radial cylindrical roller bearings using a cylindrical roller (including a needle), and outer rings and inner rings of radial conical roller bearings using a conical roller.

The embodiments described above can be performed in suitable combinations within a range having no contradiction. In addition, the technical scope of the present invention is not limited to the ranges described in the embodiments. Diverse change or improvement can be added to the embodiments. Forms having such change or improvement added thereto may also be included in the technical scope of the present invention. In addition, an arbitrary combination of these constitutions may also be adopted without being limited to the embodiments.

### [Reference Signs List]

1 Rolling bearing
2 Outer ring
3 Inner ring
4 Rolling body
5 Outer ring raceway
6 Inner ring raceway
7, 7a, 7b, 7c, 7d, 7e, 7f, 7g, 7h, 7i, 7j, 7k, 7l, 7m, 7n, 7o Induction heating apparatus
8, 8a, 8b Coil
9 Roller
10, 10a Restraining member
11 Spiral member
12 Guide rail
13 Guide groove
14 Cartridge
15 Shaft portion
16 Holding ring
17 Guide rods
18 Support stand
19 Upper surface
20, 20a Glass tube
21 Discontinuous portion
22 Upstream side part
23 Downstream side part
100 Outer ring
101 Outer ring raceway
102a, 102b One side tool
103a, 103b Base
104a, 104b Axial restraining portion
105 Radial restraining portion
106 Core
107 The other-side tool

## Claims

1. An induction heating method for a ring-shaped member comprising:
supplying a ring-shaped member to a predetermined section serving as a heating target section using an induction coil; and
moving the ring-shaped member along a reference axis so as to pass through the predetermined section, including controlling contact between the ring-shaped member and a different member by a contact control portion.

2. The induction heating method for a ring-shaped member according to claim 1,
wherein the contact control portion includes a guide member which is made of an insulating material for guiding movement of the ring-shaped member.

3. The induction heating method for a ring-shaped member according to claim 1 or 2,
wherein the contact control portion is configured such that a circumferential position of the ring-shaped member which has come into contact with the different member in the predetermined section is changed.

4. The induction heating method for a ring-shaped member according to any one of claims 1 to 3,
wherein the contact control portion has two rollers which individually extend along the reference axis and rotate in the same direction, and
in the predetermined section, the ring-shaped member moves along the reference axis while rotating around the reference axis on the two rollers.

5. The induction heating method for a ring-shaped member according to claim 4,
wherein a propulsive force of the ring-shaped member is generated on the basis of contact between the two rollers and the ring-shaped member.

6. The induction heating method for a ring-shaped member according to claim 4 or 5,
wherein the contact control portion further has a restraining member, and the ring-shaped member is disposed between the two rollers and the restraining member.

7. The induction heating method for a ring-shaped member according to any one of claims 1 to 6,
wherein the contact control portion includes a spiral member which extends along the reference axis and has a spiral shape, and
in the predetermined section, the ring-shaped member moves along the reference axis at a radially inward side of the spiral member.

8. The induction heating method for a ring-shaped member according to any one of claims 1 to 7,
wherein the contact control portion includes a tube member which extends along the reference axis and has a cylindrical shape, and
in the predetermined section, the ring-shaped member moves along the reference axis at a radially inward side of the tube member.

9. The induction heating method for a ring-shaped member according to any one of claims 1 to 8,
wherein the contact control portion includes a plurality of guide rods which individually extend along the reference axis and are disposed apart from each other in a circumferential direction around the reference axis, and
in the predetermined section, the ring-shaped member moves along the reference axis in a region surrounded by the plurality of guide rods.

10. The induction heating method for a ring-shaped member according to any one of claims 1 to 9,
wherein the contact control portion includes a guide rail which extends along the reference axis, and
in the predetermined section, the ring-shaped member moves along the reference axis by rolling on the guide rail.

11. The induction heating method for a ring-shaped member according to claim 10,
wherein the contact control portion further has a restraining member, and the ring-shaped member is disposed between the guide rail and the restraining member.

12. The induction heating method for a ring-shaped member according to any one of claims 1 to 11,
wherein the contact control portion includes a cartridge which coaxially holds a plurality of ring-shaped members, and
in the predetermined section, the cartridge holding the plurality of ring-shaped members moves along the reference axis.

13. The induction heating method for a ring-shaped member according to any one of claims 1 to 12,
wherein the reference axis in the predetermined section is set obliquely with respect to a horizontal axis or is set in a vertical direction, and
in the predetermined section, the ring-shaped member moves downward from above due to gravity.

14. The induction heating method for a ring-shaped member according to any one of claims 1 to 13,
wherein the reference axis in the predetermined section is set obliquely with respect to a horizontal axis or is set in a vertical direction,
in at least the predetermined section, a plurality of ring-shaped members are continuously disposed, and
when one of the plurality of ring-shaped members at a lower end is drawn out, the remaining ring-shaped members move downward.

15. The induction heating method for a ring-shaped member according to any one of claims 1 to 14,
wherein in the predetermined section, the ring-shaped member magnetically levitates at least temporarily.

16. The induction heating method for a ring-shaped member according to any one of claims 1 to 15,
wherein the ring-shaped member is a component of a bearing.

17. An induction heating apparatus for a ring-shaped member comprising:
an induction coil;
a power source device that supplies power to the induction coil; and
a conveyance mechanism for moving a ring-shaped member along a reference axis so as to pass through a predetermined section serving as a heating target section using the induction coil, the conveyance mechanism having a contact control portion controlling contact between the ring-shaped member and a different member.

18. A manufacturing method for a ring-shaped member comprising:
performing heat treatment with respect to the ring-shaped member by heating the ring-shaped member using the induction heating method for a ring-shaped member according to any one of claims 1 to 16.

19. A manufacturing method for a bearing including a component constituted of a ring-shaped member, the method comprising:
performing heat treatment with respect to the component by heating the component using the induction heating method for a ring-shaped member according to claim 16.

20. A manufacturing method for a vehicle including a ring-shaped member, the method comprising:
performing heat treatment with respect to the ring-shaped member by heating the ring-shaped member using the induction heating method for a ring-shaped member according to any one of claims 1 to 16.

21. A manufacturing method for a mechanical device including a ring-shaped member, the method comprising:
performing heat treatment with respect to the ring-shaped member by heating the ring-shaped member using the induction heating method for a ring-shaped member according to any one of claims 1 to 16.
